# EUROPEAN PATENT APPLICATION

(11) **EP 4 446 002 A1**
(43) Date of publication of application: **16.10.2024**
(21) Application number: 22904235.3
(22) Date of filing: 07.12.2022
(51) Int. Cl.: B01J 13/14, C08F 2/18, C08F 212/36

(54) **HOLLOW PARTICLE, RESIN COMPOSITION, AND RESIN MOLDED BODY**

(30) Priority: 10.12.2021 JP 2021201030
(71) Applicant: Zeon Corporation, Tokyo 100-8246 (JP)
(72) Inventor: MORIMURA, Miki, Tokyo 100-8246 (JP)
(74) Representative: Kraus & Lederer PartGmbB
(86) International application number: PCT/JP2022/045009
(87) International publication number: WO 2023/106307

(57) **Abstract**

To provide hollow particles configured to be low in dielectric dissipation factor at high frequencies. Hollow particles which comprise a shell containing a resin and a hollow portion surrounded by the shell, wherein a void ratio of the hollow particles is 50% or more; wherein, as the resin, the shell contains a polymer which contains 91% by mass or more of hydrocarbon monomer units and 50% by mass or more of crosslinkable monomer units; wherein at least a part of the hydrocarbon monomer units are crosslinkable hydrocarbon monomer units; wherein a residual double bond ratio of the polymer is 30.0% or less; and wherein a dielectric dissipation factor of the hollow particles at a frequency of 10 GHz is 3.00×10⁻³ or less.

## Description

### Technical Field

The disclosure relates to hollow particles, a resin composition comprising the hollow particles, and a resin molded body comprising the same.

### Background Art

Hollow particles (hollow resin particles) have a hollow in their interior. Accordingly, they are added and used in resins, coating materials, various kinds of molded bodies and so on, for the purpose of weight saving, heat insulation, permittivity reduction, etc. Their application covers a wide range of fields, such as automobiles, bicycles, aviation, electric, electronics, architecture, household appliances, containers, stationery products, tools and footwear.

In the electric or electronics field, there is an attempt to add hollow particles to insulation materials for the purpose of decreasing the permittivity and dielectric dissipation factor of the insulation materials. However, since hollow particles having an acrylic resin shell tend to be relatively high in relative permittivity and dielectric dissipation factor, there is a problem that a permittivity and dielectric dissipation factor decreasing effect is not sufficiently obtained.

Accordingly, to decrease the permittivity and the dielectric dissipation factor, the production of hollow particles using a styrenic resin is implemented.

For example, Patent Document 1 discloses hollow particles obtained by dispersing an oil phase, which contains styrene, divinylbenzene, a (meth)acrylic acid ester-based monomer having a specific structure, a peroxide-based polymerization initiator, a side chain crystalline polyolefin and heptane, in an aqueous phase, which is an aqueous solution of a surfactant, and subjecting the resulting dispersion to suspension polymerization.

Patent Document 2 discloses hollow particles obtained by dispersing an oil phase, which contains divinylbenzene, a peroxide-based polymerization initiator and hexadecane, in an aqueous phase, which is an aqueous solution of polyvinyl alcohol, and subjecting the resulting dispersion to suspension polymerization.

### Citation List

### [Patent Documents]

Patent Document 1: International Publication No. WO2021/085189
Patent Document 2: Japanese Patent Application Laid-Open (JP-A) No. 2002-80503

### Summary of Invention

### Technical Problem

In recent years, for the purpose of transmitting large volumes of information in information processing by electronic devices, there is an effort to increase a transmission frequency; moreover, there is a demand for a technique to decrease a permittivity and a dielectric dissipation factor, which is applicable to high-frequency transmission.

However, the relative permittivity and dielectric dissipation factor of conventional hollow particles at a high frequency of about 10 GHz, are not sufficiently low, and it is particularly difficult to decrease the dielectric dissipation factor.

An object of the present disclosure is to provide hollow particles configured to be low in dielectric dissipation factor at high frequencies. Another object of the present disclosure is to provide a resin composition comprising the hollow particles and a resin molded body comprising the same.

### Solution to Problem

The present inventor focused on hollow particles having a shell formed by polymerization of a polymerizable monomer, the resin composition of the shell, and the amount of unreacted polymerizable functional groups remaining in the shell. Then, the present inventor found that hollow particles configured to show a low dielectric dissipation factor at high frequencies such as 10 GHz, are obtained by incorporating a large amount of hydrocarbon monomer units in the polymer forming the skeleton of the shell, by setting the residual double bond ratio to a specific amount or less by controlling the method for forming the shell, and by increasing the void ratio of the hollow particles.

According to the present disclosure, hollow particles are provided, which comprise a shell containing a resin and a hollow portion surrounded by the shell,
wherein a void ratio of the hollow particles is 50% or more;
wherein, as the resin, the shell contains a polymer which contains 91% by mass or more of hydrocarbon monomer units and 50% by mass or more of crosslinkable monomer units; wherein at least a part of the hydrocarbon monomer units are crosslinkable hydrocarbon monomer units; wherein a residual double bond ratio of the polymer is 30.0% or less; and
wherein a dielectric dissipation factor of the hollow particles at a frequency of 10 GHz is 3.00×10⁻³ or less.

In the hollow particles of the present disclosure, a relative permittivity of the hollow particles at a frequency of 10 GHz is preferably 1.00 or more and 1.40 or less.

In the hollow particles of the present disclosure, the void ratio is preferably 65% or more.

In the hollow particles of the present disclosure, a volume average particle diameter of the hollow particles is preferably 1.0 um or more and 10.0 um or less.

According to the present disclosure, a resin composition comprising the hollow particles of the present disclosure and a matrix resin is provided.

According to the present disclosure, a resin molded body comprising the hollow particles of the present disclosure and a matrix resin is provided.

### Advantageous Effects of Invention

As described above, the present disclosure provides hollow particles configured to be low in dielectric dissipation factor at high frequencies. Also, the present disclosure provides a resin composition comprising the hollow particles and a resin molded body comprising the same.

### Brief Description of Drawing

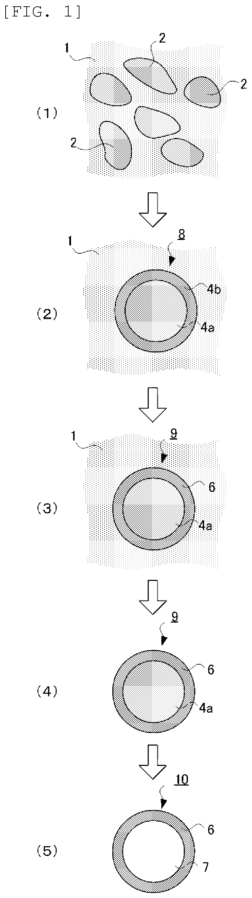

[FIG. 1] A diagram illustrating an example of the method for producing the hollow particles of the present disclosure.

### Description of Embodiments

In the present disclosure, "to" which shows a numerical range is used to describe a range in which the numerical values described before and after "to" indicate the lower limit value and the upper limit value.

Also in the present disclosure, (meth)acrylate means each of acrylate and methacrylate; (meth)acryl means each of acryl and methacryl; and (meth)acryloyl means each of acryloyl and methacryloyl.

Also in the present disclosure, the term "polymerizable monomer" means a compound having an addition-polymerizable functional group (in the present disclosure, it may be simply referred to as a "polymerizable functional group"). Also in the present disclosure, as the polymerizable monomer, a compound having an ethylenically unsaturated bond as the addition-polymerizable functional group, is generally used.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer is a polymerizable monomer which forms crosslinking in resin by polymerization reaction.

Also in the present disclosure, "hydrocarbon monomer" is a polymerizable monomer composed of the elements carbon and hydrogen; "crosslinkable hydrocarbon monomer" is a polymerizable monomer containing two or more polymerizable functional groups and composed of the elements carbon and hydrogen; and "non-crosslinkable hydrocarbon monomer" is a polymerizable monomer containing only one polymerizable functional group and composed of the elements carbon and hydrogen.

Also in the present disclosure, "excellent in dielectric property" means low relative permittivity and dielectric dissipation factor, and lower relative permittivity and dielectric dissipation factor means better dielectric property.

The hollow particles of the present disclosure are hollow particles which comprise a shell containing a resin and a hollow portion surrounded by the shell,
wherein a void ratio of the hollow particles is 50% or more;
wherein, as the resin, the shell contains a polymer which contains 91% by mass or more of hydrocarbon monomer units and 50% by mass or more of crosslinkable monomer units; wherein at least a part of the hydrocarbon monomer units are crosslinkable hydrocarbon monomer units; wherein a residual double bond ratio of the polymer is 30.0% or less; and
wherein a dielectric dissipation factor of the hollow particles at a frequency of 10 GHz is 3.00×10⁻³ or less.

The hollow particles of the present disclosure are particles which comprise a resin-containing shell (outer shell) and a hollow portion surrounded by the shell.

In the present disclosure, the term "hollow portion" means a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure. From the viewpoint of dielectric property, the hollow particles of the present disclosure preferably have a solid shell.

The hollow portion of the hollow particles can be determined by, for example, SEM observation of a cross section of the particles or TEM observation of the particles as they are.

From the viewpoint of exerting excellent dielectric property, the hollow portion of the hollow particles of the present disclosure is preferably filled with gas such as air.

In the hollow particles obtained by use of a hydrocarbon-based resin such as a styrenic resin, the dielectric property of the shell-forming resin itself is excellent; however, it is difficult to sufficiently decrease the dielectric dissipation factor at high frequencies.

Meanwhile, the hollow particles of the present disclosure are hollow particles that are low in dielectric dissipation factor even at high frequencies such as 10 GHz. In the hollow particles of the present disclosure, the polymer forming the skeleton of the shell contains a large amount of hydrocarbon monomer units, and the residual double bond ratio is low. Accordingly, it is presumed that the molecular motion of the shell is suppressed compared to conventional hollow particles. Since the polymer contains 50% by mass or more of the crosslinkable monomer units, the hollow particles of the present disclosure become particles having the hollow portion that is clearly distinguished from the shell. The hollow particles of the present disclosure are typically obtained by the suspension polymerization method, and the hollow particles having the hollow portion that is clearly distinguished from the shell in the interior of the particles, are formed. The reasons are presumed as follows: in the suspension polymerization method using a polymerizable monomer containing 50% by mass or more of a crosslinkable monomer, phase separation is likely to occur between the hydrophobic solvent and the components constituting the shell in the droplets of the monomer composition dispersed in the suspension; moreover, also due to the thus-formed shell that is excellent in strength, the deformation of the particles is suppressed. It is presumed that the hollow particles of the present disclosure have the above-described shell with low molecular mobility; moreover, they have the hollow portion that is clearly distinguished from the shell, and the void ratio is sufficiently high. Accordingly, the hollow particles of the present disclosure are sufficiently low in dielectric dissipation factor, even at high frequencies such as 10 GHz. An air layer has a dielectric dissipation factor of 0, and as the proportion of an air layer in the interior of the hollow particles increases, the dielectric dissipation factor decreases. Accordingly, as the void ratio of the hollow particles increases, the dielectric dissipation factor can be lower.

Hereinafter, an example of the method for producing the hollow particles of the present disclosure will be described. Then, the hollow particles of the present disclosure will be described in detail. Also, the resin composition and resin molded body containing the hollow particles of the present disclosure will be described.

### 1. Hollow particle production method

For example, the hollow particles of the present disclosure can be obtained by the hollow particle production method of the present disclosure,
the method comprising:
preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium, and
preparing a precursor composition containing precursor particles which have a hollow portion surrounded by a shell containing a resin and which include the hydrophobic solvent in the hollow portion, by subjecting the suspension to a polymerization reaction,
wherein, in 100% by mass of the polymerizable monomer contained in the mixture liquid, the content of a hydrocarbon monomer is 91% by mass or more; the content of a crosslinkable monomer is 50% by mass or more; and at least a part of the hydrocarbon monomer is a crosslinkable hydrocarbon monomer;
wherein the polymerization initiator contained in the mixture liquid is an organic peroxide; and
wherein, in the preparation of the precursor composition, the temperature of the polymerization reaction is a higher temperature than the 10-hour half-life temperature of the polymerization initiator.

The production method of the present disclosure follows the following basic technique: by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. By subjecting the suspension to a polymerization reaction, the surface of the droplets is cured to form the hollow particles having the hollow portion filled with the hydrophobic solvent.

According to the production method of the present disclosure, as described above, the hollow particles having the hollow portion clearly distinguished from the shell and having a high void ratio can be obtained by, in the above-described basic technique, using the polymerizable monomer containing 50% by mass or more of the crosslinkable monomer. Moreover, the hollow particles configured to show a low dielectric dissipation factor even at high frequencies can be obtained by setting the content of the hydrocarbon monomer and that of the crosslinkable monomer in the polymerizable monomer to be equal to or more than the above-specified amounts, using the organic peroxide as the polymerization initiator, and setting the polymerization temperature to a temperature higher than the 10-hour half-life temperature of the polymerization initiator. The reason for the low dielectric dissipation factor of the hollow particles obtained by the production method of the present disclosure at high frequencies, is thought as follows. First, by forming the hollow portion in the interior of the particles, the void ratio can be sufficiently increased and, accordingly, the proportion of the air layer in the interior of the hollow particles can be sufficiently increased; therefore, the dielectric dissipation factor can be low. Then, since the polymerizable monomer used for the shell formation contains a large amount of hydrocarbon monomer, the shell containing a large amount of hydrocarbon is formed. Accordingly, compared to hollow particles in which an acrylic resin or the like is the main component of the shell, the shell with low molecular mobility is formed. As a result, also due to the shell composition, the dielectric dissipation factor of the hollow particles is likely to decrease. In addition, by using the organic peroxide as the polymerization initiator and setting the polymerization temperature to a temperature higher than the 10-hour half-life temperature of the polymerization initiator, in the shell, the amount of residual unreacted polymerizable unsaturated bonds and that of the residual decomposition product of the polymerization initiator, are decreased. Accordingly, an increase in the dielectric dissipation factor of the hollow particles can be suppressed. Since the unreacted polymerizable unsaturated bonds and the decomposition product of the polymerization initiator increase the molecular motion of the shell, when these amounts are large, the dielectric dissipation factor of the hollow particles may increase. When the organic peroxide is used as the polymerization initiator, compared to the case of using other polymerization initiators, a polymerization reaction is easily promoted. In addition, since the decomposition product can be easily removed and are less likely to remain, the amount of the residual unreacted polymerizable unsaturated bonds and that of the residual decomposition product of the polymerization initiator can be reduced.

The method for producing the hollow particles of the present disclosure includes the steps of preparing the mixture liquid, preparing the suspension, and subjecting the suspension to a polymerization reaction. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid) .

A preferred embodiment of the method for producing the hollow particles of the present disclosure may be a production method including the following steps.

### (1) Mixture liquid preparation step

The mixture liquid preparation step includes preparing the mixture liquid containing the polymerizable monomer, the hydrophobic solvent, the polymerization initiator, the dispersion stabilizer and the aqueous medium.

### (2) Suspension step

The suspension step includes suspending the mixture liquid to prepare the suspension in which the droplets of the monomer composition containing the polymerizable monomer, the hydrophobic solvent and the polymerization initiator are dispersed in the aqueous medium.

### (3) Polymerization step

The polymerization step includes subjecting the suspension to a polymerization reaction to prepare the precursor composition containing the precursor particles which have the hollow portion surrounded by the shell containing the resin and which include the hydrophobic solvent in the hollow portion.

### (4) Solid-liquid separation step

The solid-liquid separation step includes performing solid-liquid separation of the precursor composition to obtain the precursor particles including the hydrophobic solvent in the hollow portion.

### (5) Solvent removal step

The solvent removal step includes removing the hydrophobic solvent from the precursor particles obtained by the solid-liquid separation step to obtain the hollow particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

FIG. 1 is a schematic diagram showing an example of the method for producing the hollow particles of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and droplets 8 of the monomer composition dispersed in the aqueous medium 1. The droplets 8 of the monomer composition contain the polymerizable monomer, the hydrophobic solvent and the polymerization initiator, and their distribution in the droplets is not uniform. The droplets 8 of the monomer composition have the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition containing the precursor particles which include the hydrophobic solvent in the hollow portion. The precursor composition contains the aqueous medium 1 and precursor particles 9 which include the hydrophobic solvent 4a in the hollow portion and which are dispersed in the aqueous medium 1. A shell 6 forming the outer surface of the precursor particles 9 is formed by polymerization of the polymerizable monomer in the droplets 8 of the monomer composition, and the shell 6 contains the polymer of the polymerizable monomer as the resin.

The diagram (4) of FIG. 1 is a schematic cross-sectional view showing an embodiment of the precursor particles after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particles after the solvent removal step. The diagram (5) of FIG. 1 shows a state where the hydrophobic solvent 4a has been removed from the state shown in the diagram (4) of FIG. 1. By the removal of the hydrophobic solvent from the precursor particles, hollow particles 10 having a gas-filled hollow portion 7 in the interior of the shell 6, are obtained.

Hereinbelow, the five steps described above and other steps are described in order.

### (1) Mixture liquid preparation step

The mixture liquid preparation step includes preparing the mixture liquid containing the polymerizable monomer, the hydrophobic solvent, the polymerization initiator, the dispersion stabilizer and the aqueous medium. The mixture liquid may further contain other materials to the extent that does not impair the effects of the present disclosure.

The materials for the mixture liquid will be described in the following order: (A) the polymerizable monomer, (B) the hydrophobic solvent, (C) the polymerization initiator, (D) the dispersion stabilizer and (E) the aqueous medium.

### (A) Polymerizable monomer

The polymerizable monomer in the mixture liquid contains at least a hydrocarbon monomer and a crosslinkable monomer. The hydrocarbon monomer contains a crosslinkable hydrocarbon monomer. The crosslinkable monomer may be composed of a crosslinkable hydrocarbon monomer, or it may be a mixture of a crosslinkable hydrocarbon monomer and a crosslinkable monomer containing a heteroatom.

To the extent that does not impair the effects of the present disclosure, the polymerizable monomer in the mixture liquid may further contain a non-crosslinkable monomer; moreover, the non-crosslinkable monomer in the mixture liquid may be composed of a non-crosslinkable hydrocarbon monomer, or the non-crosslinkable monomer in the mixture liquid may be a mixture of a non-crosslinkable hydrocarbon monomer and a non-crosslinkable monomer containing a heteroatom.

### [Hydrocarbon monomer]

The hydrocarbon monomer in the mixture liquid contains at least the crosslinkable hydrocarbon monomer, and it may further contain the non-crosslinkable hydrocarbon monomer.

As the crosslinkable hydrocarbon monomer, examples include, but are not limited to, an aromatic divinyl monomer such as divinylbenzene, divinylbiphenyl and divinylnaphthalene, and a diene monomer such as a linear or branched diolefin (e.g., butadiene, isoprene, 2,3-dimethylbutadiene, pentadiene and hexadiene) and an alicyclic diolefin (e.g., dicyclopentadiene, cyclopentadiene and ethylidene tetracyclododecene). Also, a crosslinkable macromer such as polybutadiene, polyisoprene, SBS (a block copolymer of butadiene and styrene) and SIS (a block copolymer of styrene and isoprene) may be used, for example. These crosslinkable hydrocarbon monomers may be used alone or in combination of two or more. Of them, an aromatic divinyl monomer is preferred, and divinylbenzene is more preferred, from the point of view that the polymerization reaction is easily stabilized, and hollow particles excellent in dielectric property, solvent resistance, strength, heat resistance and so on are obtained.

As the non-crosslinkable hydrocarbon monomer, examples include, but are not limited to, an aromatic monovinyl monomer such as styrene, vinyl toluene, α-methylstyrene, p-methylstyrene, ethylvinylbenzene, ethylvinylbiphenyl and ethylvinylnaphthalene; a monoolefin monomer such as a linear or branched monoolefin (e.g., ethylene, propylene and butylene); and an alicyclic monoolefin (e.g., vinylcyclohexane, norbornene, tricyclododecene and 1,4-methano-1,4,4a,9a-tetrahydrofluorene). These non-crosslinkable hydrocarbon monomers may be used alone or in combination of two or more. Of them, an aromatic monovinyl monomer is preferred, and ethylvinylbenzene is particularly preferred, from the viewpoint of improving the dielectric property of the hollow particles.

According to the production method of the present disclosure, the hollow particles excellent in dielectric property can be obtained since, in 100% by mass of the polymerizable monomer contained in the mixture liquid, the content of the hydrocarbon monomer, which is the sum of the crosslinkable hydrocarbon monomer and the non-crosslinkable hydrocarbon monomer, is 91% by mass or more. From the viewpoint of further improving the dielectric property of the hollow particles, the content of the hydrocarbon monomer is preferably 94% by mass or more, more preferably 96% by mass or more, and still more preferably 100% by mass. When the content of the hydrocarbon monomer is equal to or more than the lower limit value, the effect of decreasing the dielectric dissipation factor is easily obtained by decreasing the residual double bond ratio, and the heat resistance of the hollow particles can be improved. When the polymerizable monomer of the mixture liquid contains a polymerizable monomer different from the hydrocarbon monomer, the content of the hydrocarbon monomer may be 99% by mass or less, or it may be 98% by mass or less, for example.

The content of the crosslinkable hydrocarbon monomer is not particularly limited. From the viewpoint of improving the dielectric property, solvent resistance, strength, pressure resistance and so on of the hollow particles and forming the hollow portion clearly distinguished from the shell, with respect to 100% by mass of the polymerizable monomer contained in the mixture liquid, the content of the crosslinkable hydrocarbon monomer is preferably 50% by mass or more, more preferably 70% by mass or more, still more preferably 75% by mass or more, even more preferably 90% by mass or more, and particularly preferably 95% by mass or more. It is presumed that since the area of a crosslinking moiety is increased by containing a large amount of the crosslinkable hydrocarbon monomer, the shell is less likely to be damaged, and the pressure resistance improves. The upper limit of the content of the crosslinkable hydrocarbon monomer is not particularly limited. For example, the upper limit may be 98% by mass or less, or it may be 96% by mass or less. By containing the crosslinkable hydrocarbon monomer in combination with a non-crosslinkable monomer, the heat resistance of the hollow particles can be improved.

The content of the non-crosslinkable hydrocarbon monomer is not particularly limited. From the viewpoint of forming the hollow portion clearly distinguished from the shell, with respect to 100% by mass of the polymerizable monomer contained in the mixture liquid, the content of the non-crosslinkable hydrocarbon monomer is preferably 50% by mass or less, more preferably 40% by mass or less, still more preferably 30% by mass or less, and even more preferably 20% by mass or less. The lower limit of the content of the non-crosslinkable hydrocarbon monomer is not particularly limited. For example, the lower limit may be 2% by mass or more, or it may be 4% by mass or more.

### [Polymerizable monomer different from hydrocarbon monomers]

The polymerizable monomer in the mixture liquid may further contain the polymerizable monomer different from hydrocarbon monomers, to the extent that does not impair the effects of the present disclosure. The polymerizable monomer different from hydrocarbon monomers may be a crosslinkable monomer or a non-crosslinkable monomer.

As the crosslinkable monomer different from hydrocarbon monomers, examples include, but are not limited to, a crosslinkable allyl monomer such as diallyl phthalate, and a crosslinkable acrylic monomer such as ethylene glycol di(meth)acrylate, diethylene glycol di(meth)acrylate, pentaerythritol di(meth)acrylate, pentaerythritol tetra(meth)acrylate, tricyclodecane dimethanol di(meth)acrylate, 3-(meth)acryloyloxy-2-hydroxypropyl (meth)acrylate, trimethylolpropane tri(meth)acrylate, ditrimethylolpropane tetra(meth)acrylate, ethoxylated trimethylolpropane tri(meth)acrylate, ethoxylated pentaerythritol tetra(meth)acrylate, pentaerythritol tri(meth)acrylate, pentaerythritol tetra(meth)acrylate, dipentaerythritol hexa(meth)acrylate, dipentaerythritol poly(meth)acrylate, allyl (meth)acrylate and vinyl (meth)acrylate. Also, a crosslinkable macromer such as both-vinyl-terminated polyphenylene ether and both-(meth)acrylic-terminated polyphenylene ether may be used, for example.

As the non-crosslinkable monomer different from hydrocarbon monomers, examples include, but are not limited to, a non-crosslinkable acrylic monomer such as methyl (meth)acrylate, ethyl (meth)acrylate, butyl (meth)acrylate, 2-ethylhexyl (meth)acrylate, lauryl (meth)acrylate, t-butylaminoethyl (meth)acrylate, glycidyl (meth)acrylate, 2-hydroxyethyl (meth)acrylate, 2-aminoethyl (meth)acrylate, (meth)acrylic acid, methoxy polyethylene glycol (meth)acrylate, ethoxy polyethylene glycol (meth)acrylate, propoxy polyethylene glycol (meth)acrylate, butoxy polyethylene glycol (meth)acrylate, hexaoxy polyethylene glycol (meth)acrylate, octoxy polyethylene glycol polypropylene glycol (meth)acrylate, lauroxy polyethylene glycol (meth)acrylate, stearoxy polyethylene glycol (meth)acrylate, phenoxy polyethylene glycol polypropylene glycol (meth)acrylate, polyethylene glycol mono(meth)acrylate, polypropylene glycol mono(meth)acrylate, polyethylene glycol propylene glycol mono(meth)acrylate, polyethylene glycol tetramethylene glycol (meth)acrylate, propylene glycol polybutylene glycol mono(meth)acrylate, and monoethylene glycol mono(meth)acrylate; an acrylamide monomer such as (meth)acrylamide, N-methylol (meth)acrylamide and N-butoxymethyl (meth)acrylamide, and derivatives thereof; a carboxylic acid vinyl ester monomer such as vinyl acetate; a vinyl halide monomer such as vinyl chloride; a vinylidene halide monomer such as vinylidene chloride; and a vinylpyridine monomer. Also, a non-crosslinkable macromer such as (meth)acrylic-terminated polystyrene and (meth)acrylic-terminated polymethyl methacrylate may be used, for example.

In the production method of the present disclosure, from the viewpoint of forming the hollow portion clearly distinguished from the shell, with respect to 100% by mass of the polymerizable monomer contained in the mixture liquid, the content of the crosslinkable monomer, which is the sum of the crosslinkable hydrocarbon monomer and the crosslinkable monomer different from hydrocarbon monomers, is 50% by mass or more, and it is preferably 70% by mass or more, more preferably 75% by mass or more, still more preferably 90% by mass or more, and even more preferably 95% by mass or more. When the content of the crosslinkable monomer is 50% by mass or more, phase separation between the hydrophobic solvent and the components forming the shell is likely to occur in the droplets of the monomer composition. Also, due to the shell thus formed with excellent strength, the deformation of the particles is suppressed. Therefore, the hollow portion is easily formed. Also, since the crosslinking density of the shell can be improved by increasing the content of the crosslinkable monomer, there are the following advantages: the solvent resistance, strength, pressure resistance and so on of the obtained hollow particles can be improved. It is presumed that since the area of crosslinking moieties is increased by containing a large amount of the crosslinkable monomer, the shell is less likely to be damaged, and the pressure resistance improves.

When the polymerizable monomer of the mixture liquid contains the non-crosslinkable monomer, the content of the crosslinkable monomer may be 98% by mass or less, or it may be 96% by mass or less, for example. By containing the crosslinkable monomer in combination with a non-crosslinkable monomer, the heat resistance of the hollow particles can be improved.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the polymerizable monomer is preferably from 15% by mass to 50% by mass, and more preferably from 20% by mass to 40% by mass.

From the viewpoint of increasing the dielectric property of the hollow particles, the content of the polymerizable monomer is preferably 96% by mass or more, and more preferably 97% by mass or more, with respect to the total mass (100% by mass) of a solid component obtained by excluding the hydrophobic solvent from the material for the oil phase in the mixture liquid.

In the present disclosure, the solid component includes all components excluding solvent, and a liquid polymerizable monomer and the like are included in the solid component.

### (B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

As the hydrophobic solvent, such an organic solvent is preferably selected, that the solubility in water at 20°C is smaller than the crosslinkable hydrocarbon monomer contained in the mixture liquid. When the crosslinkable hydrocarbon monomer or the hydrophobic solvent is a combination of two or more kinds of crosslinkable hydrocarbon monomers or hydrophobic solvents, it is preferable to select the hydrophobic solvents according to the type of the crosslinkable hydrocarbon monomers so that the solubility of the hydrophobic solvent having the largest solubility is smaller than the crosslinkable hydrocarbon monomer having the smallest solubility.

The organic solvent such that the solubility in water at 20°C is smaller than the crosslinkable hydrocarbon monomer, can be appropriately selected from known organic solvents, and it is not particularly limited. For example, a hydrocarbon solvent is preferably used. The use of a hydrocarbon solvent is preferred from the point of view that its solubility in water at 20°C is smaller than divinylbenzene, which is a crosslinkable hydrocarbon monomer preferably used in the present disclosure.

As the hydrocarbon solvent, examples include, but are not limited to, a chain hydrocarbon solvent such as pentane, hexane, heptane, octane, 2-methylbutane and 2-methylpentane, a cyclic hydrocarbon solvent such as cyclohexane, methylcyclohexane and cycloheptane, and an aromatic hydrocarbon solvent such as benzene, toluene and xylene.

The hydrocarbon solvent is preferably a chain hydrocarbon solvent, more preferably a chain hydrocarbon solvent containing 5 to 8 carbon atoms, and still more preferably at least one kind selected from the group consisting of pentane, hexane, heptane and octane, from the following viewpoints: the hollow portion is easily formed; the hollow particles excellent in hollow dielectric property are easily obtained; and the amount of the hydrophobic solvent remaining in the hollow particles can be easily decreased due to the ease of removal.

These hydrophobic solvents may be used alone or in combination of two or more.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the production method of the present disclosure, is preferably 2.0 or less. The relative permittivity is one of the indices of the level of the polarity of a compound. In the case where the relative permittivity of the hydrophobic solvent is 2.0 or less and sufficiently small, it is considered that phase separation progresses rapidly in the droplets of the monomer composition and the hollow portion is easily formed.

Examples of hydrophobic solvents having a relative permittivity at 20°C of 2.0 or less, are as follows. The inside of the parentheses is the value of relative permittivity.

Pentane (1.8), hexane (1.9), heptane (1.9), octane (1.9).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the polymerizable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. With respect to 100 parts by mass of the polymerizable monomer, the content of the hydrophobic solvent in the mixture liquid is more preferably 60 parts by mass or more and 400 parts by mass or less, and still more preferably 70 parts by mass or more and 300 parts by mass or less.

### (C) Polymerization initiator

In the production method of the present disclosure, the hollow particles low in dielectric dissipation factor can be obtained by using the organic peroxide as the polymerization initiator. Since the organic peroxide is lipophilic, it exists in the interior of the droplets of the monomer composition in the below-described suspension step. In the below-described polymerization step, the organic peroxide generates polymerization initiating radicals in the interior of the droplets of the monomer composition. Therefore, the precursor particles having a target particle diameter can be produced without an excessive growth of the droplets. From the point of view that the polymerization initiator used in the present disclosure easily penetrates the interior of the droplets of the monomer composition, the solubility in water is preferably 0.2% by mass or less.

As the organic peroxide preferably used in the present disclosure, examples include, but are not limited to, benzoyl peroxide, lauroyl peroxide, t-butyl peroxy-2-ethylhexanoate, t-butylperoxy diethylacetate and t-butylperoxy pivalate. From the viewpoint of ease of obtaining the hollow particles excellent in dielectric property, at least one selected from t-butylperoxy diethylacetate and t-butylperoxy pivalate is preferred, and t-butylperoxy diethylacetate is more preferred.

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the oil-soluble polymerization initiator is equal to or more than the lower limit value, the polymerization reaction can progress sufficiently. When the content of the polymerization initiator is equal to or less than the upper limit value, the polymerization initiator is less likely to remain after the end of the polymerization reaction, and an unexpected side reaction is less likely to progress.

### (D) Dispersion stabilizer

The dispersion stabilizer is an agent for dispersing the droplets of the monomer composition in the aqueous medium in the suspension step. In the present disclosure, an inorganic dispersion stabilizer is preferably used as the dispersion stabilizer, from the point of view that the particle diameter of the droplets can be easily controlled in the suspension, and the particle size distribution of the obtained hollow particles can be sharp, and that an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron(II)hydroxide; and silicon dioxide. These inorganic dispersion stabilizers may be used alone or in combination of two or more.

Of these inorganic dispersion stabilizers, a sparingly water-soluble inorganic dispersion stabilizer is preferred; a sparingly water-soluble metal salt such as the above-mentioned sulfate, carbonate, phosphate and metal hydroxide is more preferred; a metal hydroxide is still more preferred; and magnesium hydroxide is particularly preferred.

In the present disclosure, the sparingly water-soluble inorganic dispersion stabilizer is preferably an inorganic compound such that the solubility in 100 g of water is 0.5 g or less. Also in the present disclosure, the sparingly water-soluble metal salt is preferably an inorganic metal salt such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred. The water-soluble polyvalent metal salts may be used alone or in combination of two or more.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts.

Also, colloidal silica may be used as the colloidal dispersion containing the sparingly water-soluble inorganic dispersion stabilizer colloidal particles.

In the production method of the present disclosure, a surfactant is preferably not used as the dispersion stabilizer. If the surfactant used as the dispersion stabilizer remains on the surface of the hollow particles, it tends to increase the dielectric dissipation factor of the hollow particles.

In the present disclosure, the surfactant is a compound having a hydrophilic group and a hydrophobic group per molecule, and it encompasses a compound that is generally used as a surfactant. In general, the surfactant has such a water solubility, that the solubility in water at 25°C is 1 g/L or more.

The surfactant may be, for example, an anionic surfactant, a nonionic surfactant, a cationic surfactant or an amphoteric surfactant. The surfactant may be a conventionally-known surfactant.

As the anionic surfactant, examples include, but are not limited to, carboxylates such as alkali metal salts of a higher fatty acid; sulfates such as higher alcohol sulfates and higher alkyl ether sulfates; sulfonates such as alkylbenzene sulfonates, alkyl sulfonates and paraffin sulfonates; and phosphates such as higher alcohol phosphates.

As the nonionic surfactant, examples include, but are not limited to, a polyethylene glycol-type nonionic surfactant such as a higher alcohol ethylene oxide adduct, a fatty acid ethylene oxide adduct, a higher alkylamine ethylene oxide adduct and a polypropylene glycol ethylene oxide adduct, and a polyhydric alcohol nonionic surfactant such as polyethylene oxide, a fatty acid ester of glycerin, a fatty acid ester of pentaerythritol, a fatty acid ester of sorbit or sorbitan, an alkyl ether of polyhydric alcohol, and an aliphatic amide of alkanolamine.

As the cationic surfactant, examples include, but are not limited to, a quaternary ammonium salt such as an alkyltrimethylammonium salt.

As the amphoteric surfactant, examples include, but are not limited to, an amino acid-type amphoteric surfactant such as a higher alkyl higher alkyl aminopropionate, and a betaine-type amphoteric surfactant such as a higher alkyl dimethyl betaine and a higher alkyl dihydroxyethyl betaine.

Also in the present disclosure, the surfactant encompasses a high-molecular-weight compound having both a hydrophilic group and a hydrophobic group, such as polyvinyl alcohol, methyl cellulose, ethyl cellulose, polyacrylic acid, polyacrylimide, polyethylene oxide, and poly(hydroxystearic acid-g-methyl methacrylate-co-methacrylic acid) copolymer.

The molecular weight of the surfactant is not particularly limited. It is generally less than 3000.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is generally 2 parts by mass or more and 15 parts by mass or less, and preferably 3 parts by mass or more and 8 parts by mass or less.

### (E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The mixture liquid may further contain other materials that are different from the above-mentioned materials (A) to (E), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the polymerizable monomer, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable monomer, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced. Also, the particle diameter of the hollow particles can be easily controlled.

### (2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited, and a known suspension method can be employed. A disperser is used to prepare the suspension, and it may be a commercially-available mixer. As the mixer, examples include, but are not limited to, a horizontal or vertical in-line disperser such as MILDER (product name, manufactured by Pacific Machinery & Engineering Co., Ltd.), CAVITRON (product name, manufactured by EUROTEC, Ltd.) and an in-line disperser manufactured by IKA (e.g., DISPAX-REACTOR (registered trademark) DRS (product name)), and an emulsifying disperser such as HOMOMIXER MARK II series manufactured by PRIMIX Corporation.

In the suspension prepared in the suspension step, the droplets of the monomer composition containing the lipophilic materials mentioned above and having a particle diameter of approximately from 1 um to 10 µm, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the monomer composition dispersed in the aqueous medium are formed by the oil-soluble monomer composition and the dispersion stabilizer surrounding the periphery of the oil-soluble monomer composition. The droplets of the monomer composition contain the oil-soluble polymerization initiator, the polymerizable monomer and the hydrophobic solvent.

The droplets of the monomer composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets.

In such a suspension polymerization method using the oil-soluble polymerization initiator, there is no opportunity for the polymerization initiator to come into contact with the polymerizable monomer dispersed in the aqueous medium. Thus, the subgeneration of surplus resin particles (e.g., solid particles having a relatively small particle diameter) in addition to the target resin particles having the hollow portion, can be suppressed by using the oil-soluble polymerization initiator.

### (3) Polymerization step

The polymerization step includes preparing a precursor composition containing precursor particles which have a hollow portion surrounded by a shell containing a resin and which include the hydrophobic solvent in the hollow portion, by subjecting the suspension obtained by the above-described suspension step to a polymerization reaction. The precursor particles are formed by polymerization of the polymerizable monomer contained in the droplets of the monomer composition, and the shell of the precursor particles contains the polymer of the polymerizable monomer as the resin.

The polymerization system is not particularly limited. For example, a batch system, a semicontinuous system or a continuous system may be employed.

In the production method of the present disclosure, the polymerization temperature of the polymerization step is set to a temperature higher than the 10-hour half-life temperature of the polymerization initiator. Accordingly, the polymerization reaction can progress sufficiently, and the residual double bond ratio can be decreased. From the same point of view, it is preferable that the polymerization temperature is higher than the 10-hour half-life temperature of the polymerization initiator, and the difference between the polymerization temperature and the 10-hour half-life temperature of the polymerization initiator is 3°C or more. More preferably, the difference is 5°C or more. When several polymerization initiators are used in combination, it is preferable to set the polymerization temperature as described above, based on the polymerization initiator having the highest 10-hour half-life temperature.

From the viewpoint of sufficient progress of the polymerization reaction, the lower limit of the polymerization temperature is preferably 20°C or more, more preferably 65°C or more, and still more preferably 80°C or more.

On the other hand, the upper limit of the polymerization temperature is appropriately adjusted to a temperature at which the evaporation of the aqueous medium does not occur, and the upper limit is not particularly limited. When water is used as the aqueous medium, to prevent the evaporation of water, the upper limit is preferably less than 100°C.

The temperature increase rate up to the polymerization temperature is not particularly limited, and it is preferably from 10°C/h to 60°C/h, and more preferably from 15°C/h to 55°C/h.

The polymerization reaction time is preferably 7 hours or more, more preferably 15 hours or more, and still more preferably 24 hours or more, from the viewpoint of sufficient progress of the polymerization reaction and a decrease in the residual double bond ratio. On the other hand, the polymerization reaction time is preferably 48 hours or less, from the viewpoint of suppressing a decrease in production efficiency.

In the polymerization step, the shell portion of the droplets of the monomer composition, which contain the hydrophobic solvent in the interior, polymerizes. Accordingly, as described above, the hollow portion filled with the hydrophobic solvent is formed in the interior of the obtained precursor particles.

### (4) Solid-liquid separation step

The solid-liquid separation step includes performing solid-liquid separation of the precursor composition which contains the precursor particles and which is obtained by the above-described polymerization step, to obtain a solid component containing the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

### (5) Solvent removal step

The solvent removal step includes removing the hydrophobic solvent from the precursor particles obtained by the solid-liquid separation step.

For example, by removing the hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, the hydrophobic solvent may be removed as follows: the precursor composition obtained in the polymerization step, which is in the form of slurry, is not subjected to solid-liquid separation and, instead, the hydrophobic solvent may be removed in the slurry containing the precursor particles and the aqueous medium.

In this method, for example, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, an aqueous slurry of the hollow particles including an inert gas, is obtained. The slurry is subjected to solid-liquid separation to obtain hollow particles, and the residual aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by removing, in the slurry containing the precursor particles and the aqueous medium, the hydrophobic solvent from the precursor particles, subjecting the slurry to solid-liquid separation, and then removing the residual aqueous medium from the particles in the gaseous atmosphere. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, the hydrophobic solvent included in the precursor particles may be removed therefrom after the polymerization step and before the solid-liquid separation step, without the solid-liquid separation of the slurry precursor composition obtained in the polymerization step, by use of the following method, for example: evaporating the hydrophobic solvent included in the precursor particles from the precursor composition at a predetermined pressure (a high, normal or reduced pressure), or evaporating the hydrophobic solvent included in the precursor particles from the precursor composition by introducing water vapor or inert gas such as nitrogen, argon and helium to the precursor composition at a predetermined pressure (a high, normal or reduced pressure).

### (6) Others

In addition to the steps (1) to (5) mentioned above, the following washing step (6-a) and the following particle interior substitution step (6-b) may be added, for example.

### (6-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably controlled to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

### (6-b) Particle interior substitution step

The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

### 2. Hollow particles

The hollow particles of the present disclosure are hollow particles which comprise a shell containing a resin and a hollow portion surrounded by the shell, wherein a void ratio of the hollow particles is 50% or more; wherein, as the resin, the shell contains a polymer which contains 91% by mass or more of hydrocarbon monomer units and 50% by mass or more of crosslinkable monomer units; wherein at least a part of the hydrocarbon monomer units are crosslinkable hydrocarbon monomer units; wherein a residual double bond ratio of the polymer is 30.0% or less; and wherein a dielectric dissipation factor of the hollow particles at a frequency of 10 GHz is 3.00×10⁻³ or less.

The hollow particles of the present disclosure contain the polymer of the above-described polymerizable monomer as the main component of the shell, and the polymer forms the skeleton of the shell of the hollow particles.

In the hollow particles of the present disclosure, with respect to all constitutional units (100 parts by mass) of the polymer contained in the shell, the content of the hydrocarbon monomer units is 91% by mass or more, thereby improving the dielectric property. From the viewpoint of further improving the dielectric property of the hollow particles, the content of the hydrocarbon monomer units is preferably 94% by mass or more, more preferably 96% by mass or more, and still more preferably 100% by mass. When the content of the hydrocarbon monomer units is equal to or more than the lower limit value, the effect of decreasing the dielectric dissipation factor by decreasing the residual double bond ratio, is easily obtained; moreover, the heat resistance of the hollow particles can be improved. When the polymer contains monomer units different from the hydrocarbon monomer units, the content of the hydrocarbon monomer units may be 99% by mass or less, or it may be 98% by mass or less, for example.

In the hollow particles of the present disclosure, with respect to all constitutional units (100 parts by mass) of the polymer contained in the shell, the content of the crosslinkable monomer units is 50% by mass or more. Accordingly, the hollow particles obtain the hollow portion clearly distinguished from the shell, and they are excellent in solvent resistance, strength, pressure resistance and so on. The content of the crosslinkable monomer units is preferably 70% by mass or more, more preferably 75% by mass or more, still more preferably 90% by mass or more, and particularly preferably 95% by mass or more. The upper limit of the content of the crosslinkable monomer units is not particularly limited. For example, the upper limit may be 98% by mass or less, or it may be 96% by mass or less. By containing the crosslinkable monomer units in combination with non-crosslinkable monomer units, the heat resistance of the hollow particles can be improved.

From the viewpoint of improving the dielectric property, improving the solvent resistance, the strength, the pressure resistance and so on, and obtaining the hollow portion clearly distinguished from the shell, in the hollow particles of the present disclosure, with respect to all constitutional units (100 parts by mass) of the polymer contained in the shell, the content of the crosslinkable hydrocarbon monomer units is preferably 50% by mass or more, more preferably 70% by mass or more, still more preferably 75% by mass or more, even more preferably 90% by mass or more, and particularly preferably 95% by mass or more. The upper limit of the content of the crosslinkable hydrocarbon monomer units is not particularly limited. For example, the upper limit may be 98% by mass or less, or it may be 96% by mass or less. By containing the crosslinkable hydrocarbon monomer units in combination with non-crosslinkable monomer units, the heat resistance of the hollow particles can be improved.

In the hollow particles of the present disclosure, when the polymer contained in the shell contains non-crosslinkable hydrocarbon monomer units, the content of the non-crosslinkable hydrocarbon monomer units is not particularly limited. From the viewpoint of obtaining the hollow portion clearly distinguished from the shell, with respect to all constitutional units (100 parts by mass) of the polymer contained in the shell, the content of the non-crosslinkable hydrocarbon monomer units is preferably 50% by mass or less, more preferably 40% by mass or less, still more preferably 30% by mass or less, and even more preferably 20% by mass or less. The lower limit of the content of the non-crosslinkable hydrocarbon monomer units is not particularly limited. For example, the lower limit may be 2% by mass or more, or it may be 4% by mass or more.

In the hollow particles of the present disclosure, in the total solid content (100% by mass) of the shell, the content of the polymer of the polymerizable monomer is preferably 96% by mass or more, more preferably 97% by mass or more, still more preferably 98% by mass, and even more preferably 99% by mass or more. By setting the content of the polymer to the lower limit value or more, the dielectric property and strength of the hollow particles can be improved.

In the hollow particles of the present disclosure, the residual double bond ratio of the polymer contained in the shell is 30.0% or less, preferably 20.0% or less, and more preferably 15.0% or less. In the hollow particles of the present disclosure, it is presumed that the residual double bond ratio equal to or less than the upper limit value contributes to the improvement of the dielectric property. When the residual double bond ratio is equal to or less than the upper limit value, the hollow particles obtain excellent heat resistance. The lower limit of the residual double bond ratio is not particularly limited. From the viewpoint of improving the dielectric property of the hollow particles, the residual double bond ratio is preferably as low as possible. From the viewpoint of ease of production, the lower limit of the residual double bond ratio may be 1% or more, may be 3% or more, or may be 5% or more, for example.

The residual double bond ratio can be obtained as follows.

First, the infrared absorption spectrum of the polymer contained in the hollow particles and that of the polymerizable monomer used for the production of the hollow particles and before being subjected to a polymerization reaction, are measured, both of which are expressed in absorbance.

Meanwhile, among polymerizable monomers used for the production of the hollow particles, one that its content is the largest, is specified as a reference monomer. When there are several polymerizable monomers that their contents are the largest, one of them is specified as a reference monomer. From the structures included in the reference monomer, one structure whose amount does not increase or decrease before and after a polymerization reaction, is selected. As the structure whose amount does not increase or decrease before and after a polymerization reaction, a structure such that its infrared absorption spectrum peak is clearly distinguishable from the peak of a polymerizable unsaturated double bond (C=C) and is high in intensity, is preferably selected from the structures which are included in the reference monomer and which do not contribute to a polymerization reaction. The peak derived from the structure is selected and specified as a reference peak.

For the infrared absorption spectrum of the polymer and that of the polymerizable monomer, the peak intensity of the reference peak is divided by the content rate of the monomer containing the structure showing the reference peak. The value thus calculated is specified as a reference peak intensity.

Also, for the infrared absorption spectrum of the polymer and that of the polymerizable monomer, the peak intensity of the peak derived from the polymerizable unsaturated double bond (C=C) is measured.

The ratio (M₁/M₀) of the peak intensity (M₁) of the peak derived from the polymerizable unsaturated double bond (C=C) to the reference peak intensity (M₀), all of which are obtained from the infrared absorption spectrum of the polymerizable monomer before being subjected to a polymerization reaction, is specified as a peak intensity ratio when the residual double bond ratio is 100%.

The ratio of (P₁/P₀) of the peak intensity (P₁) of the peak derived from the polymerizable unsaturated double bond (C=C) to the reference peak intensity (P₀), all of which are obtained from the infrared absorption spectrum of the polymer contained in the hollow particles, is obtained in the same manner as described above. Then, using the peak intensity ratio (M₁/M₀) obtained from the infrared absorption spectrum of the polymerizable monomer and the peak intensity ratio (P₁/P₀) obtained from the infrared absorption spectrum of the polymer, the residual double bond ratio can be calculated by the following formula (A).

### Residual double bond ratio (%) = {(P₁/P₀)/(M₁/M₀) }×100 Formula (A)

Each of the peak intensities can be quantified as a height from a base line, which is a straight line drawn between base points placed on the outside of both ends of the peak, to the peak top. The peak intensity and peak intensity ratio values used for the calculation of the residual double bond ratio are values rounded to three significant figures according to Rule B of JIS Z8401:1999. The residual double bond ratio is a value rounded to one decimal place.

For example, when the polymerizable monomer used for the production of the hollow particles is 95% by mass of divinylbenzene and 5% by mass of ethylvinylbenzene, the reference monomer is the divinylbenzene since the content is largest. From the divinylbenzene structure, for example, the C-H bond of the benzene ring contained in the divinylbenzene is selected as the structure that does not increase or decrease before and after a polymerization reaction. Then, the infrared absorption spectrum of the polymerizable monomer composed of 95% by mass of divinylbenzene and 5% by mass of ethylvinylbenzene is measured, as well as the infrared absorption spectrum of the polymer contained in the hollow particles. For each of the spectra, the peak derived from the C-H bond of the benzene ring contained in the divinylbenzene is specified as the reference peak. Since the peak derived from the C-H bond of the benzene ring contained in the divinylbenzene and the peak derived from the C-H bond of the benzene ring contained in the ethylvinylbenzene appear at the same position, the divinylbenzene and the ethylvinylbenzene correspond to the monomer containing the structure that shows the reference peak. Accordingly, the value obtained by dividing the peak intensity of the reference peak by 1.00, which is the total of the content rate of the divinylbenzene content and that of the ethylvinylbenzene content, is defined as a reference peak intensity. In each spectrum, the peak intensity of the peak derived from the polymerizable unsaturated double bond (C=C) contained in the divinylbenzene and the polymerizable unsaturated double bond (C=C) contained in the ethylvinylbenzene is measured. Then, using the ratio (M₁/M₀) of the peak intensity (M₁) of the peak derived from the polymerizable unsaturated double bond (C=C) to the reference peak intensity (M₀) obtained from the infrared absorption spectrum of the polymerizable monomer and the ratio (P₁/P₀) of the peak intensity (P₁) of the peak derived from the polymerizable unsaturated double bond (C=C) to the reference peak intensity (P₀) obtained from the infrared absorption spectrum of the polymer contained in the hollow particles, the residual double bond ratio is calculated by the formula (A).

The infrared absorption spectra can be measured by the attenuated total reflection (ATR) method, for example. The device for measuring the infrared absorption spectra may be SPECTRUM ONE (product name, manufactured by: Perkin Elmer, Inc.), for example.

Also in the hollow particles of the present disclosure, from the viewpoint of suppressing a deterioration in the dielectric property, in the total solid content (100% by mass) of the shell, the content of components other than the polymer is preferably 4% by mass or less, more preferably 3% by mass or less, still more preferably 2% by mass or less, and even more preferably 1% by mass or less.

As the components other than the polymer contained in the hollow particles of the present disclosure, examples include, but are not limited to, residual unreacted polymerizable monomers, polymers different from the polymer of the polymerizable monomer, the decomposition product of the polymerization initiator, and low-molecular compounds contained as impurities in the raw materials for the polymerizable monomer. When the components have a low boiling point (e.g., a boiling point of 200°C or less), they are generally removed in the process of producing the hollow particles. However, when the components have a high boiling point (e.g., a boiling point of 250°C or more), there is a possibility that they are not removed and remain.

In the hollow particles of the present disclosure, from the viewpoint of improving the dielectric property, the content of the surfactant present on the surface of the hollow particles is preferably 500 ppm or less, more preferably 200 ppm or less, still more preferably 100 ppm or less, and even more preferably 50 ppm or less. When the surfactant in the process of producing the hollow particles, for example, when the mixture liquid is mixed with the surfactant, the surfactant may remain on the surface of the obtained hollow particles. However, by not using the surfactant as the dispersion stabilizer in the process of producing the hollow particles, the content of the surfactant present on the surface of the hollow particles can be adjusted to 10 ppm or less, and more preferably 1 ppm or less.

In the present disclosure, the content of the surfactant present on the surface of the hollow particles is the ratio of the mass of the surfactant present on the surface of the hollow particles to the mass of the hollow particles. The surfactant present on the surface of the hollow particles can be extracted by, for example, ultrasonication of the hollow particles in water. The type and mass of the surfactant extracted in water can be specified by the peak position and peak intensity of a ¹H-NMR spectrum.

In the hollow particles of the present disclosure, from the viewpoint of improving the dielectric property, the content of metal is preferably 100 ppm or less, more preferably 80 ppm or less, and still more preferably 70 ppm or less. The metal encompasses metal ions. In the hollow particles of the present disclosure, when both the surfactant content and the metal content are decreased to the above-described upper limit values or less, the dielectric property can be improved beyond the sum of the effect exerted by the reduction of the surfactant amount and the effect exerted by the reduction of the content of the metal.

In the present disclosure, the content of the metal in the hollow particles is the ratio of the total mass of the metal components contained in the hollow particles to the mass of the hollow particles. To adjust the metal content in the hollow particles to the upper limit value or less, for example, it is preferable to use a metal-free polymerization initiator, to use deionized water as the aqueous medium, to carry out the washing process in the production of the hollow particles, or to employ a method for removing the hydrophobic solvent from the precursor particles in the air, in the solvent removal step in the production of the hollow particles.

The content of the metal contained in the hollow particles can be measured by ICP atomic emission spectroscopy. The metal species can be specified by X-ray fluorescence spectrometry (XRF) .

The dielectric dissipation factor of the hollow particles of the present disclosure at a frequency of 10 GHz, is 3.00×10⁻³ or less, preferably 2.60×10⁻³ or less, more preferably 2.50×10⁻³ or less, still more preferably 1.00×10⁻³ or less, even more preferably 8.00×10⁻⁴ or less, and particularly preferably 7.50×10⁻⁴ or less. On the other hand, the lower limit is not particularly limited, and it may be 1.00×10⁻⁴ or more, for example.

The relative permittivity of the hollow particles of the present disclosure at a frequency of 10 GHz, is preferably 1.50 or less, more preferably 1.45 or less, and still more preferably 1.40 or less. On the other hand, the lower limit is not particularly limited, and it may be 1.00 or more, for example.

In the present disclosure, the relative permittivity and dielectric dissipation factor of the hollow particles are measured by use of a perturbation-type measuring device, at a measurement frequency of 10 GHz.

The void ratio of the hollow particles of the present disclosure is 50% or more, preferably 60% or more, more preferably 65% or more, and still more preferably 70% or more. When the void ratio is equal to or more than the lower limit value, the hollow particles are excellent in dielectric property and also excellent in lightness in weight, heat insulation properties and so on. The upper limit of the void ratio of the hollow particles is not particularly limited. From the viewpoint of suppressing a decrease in the strength of the hollow particles to be less likely to collapse, the upper limit is preferably 90% or less, more preferably 85% or less, and still more preferably 80% or less.

The void ratio of the hollow particles can be calculated from the apparent density D₁ and true density D₀ of the hollow particles.

A method for measuring the apparent density D₁ of the hollow particles is as follows. First, approximately 30 cm³ of the hollow particles are introduced into a measuring flask with a volume of 100 cm³, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density D₁ (g/cm³) of the hollow particles is calculated by the following formula (I). Apparent density D1 = [Mass of the hollow particles]/(100-[Mass of the isopropanol]/[Specific gravity of the isopropanol at the measuring temperature])

The apparent density D₁ is equivalent to the specific gravity of the whole hollow particle in the case where the hollow portion is regarded as a part of the hollow particle.

A method for measuring the true density D₀ of the hollow particles is as follows. The hollow particles are pulverized in advance; approximately 10 g of the pulverized hollow particles are introduced into a measuring flask with a volume of 100 cm³; and the mass of the introduced pulverized particles is precisely weighed. After that, similarly to the measurement of the apparent density mentioned above, isopropanol is added to the measuring flask; the mass of the isopropanol is precisely weighed; and the true density D₀ (g/cm³) of the hollow particles is calculated by the following formula (II). True density D0 = [Mass of the pulverized hollow particles]/(100-[Mass of the isopropanol]/[Specific gravity of the isopropanol at the measuring temperature])

The true density D₀ is equivalent to the specific gravity of the shell portion alone of the hollow particle. As is clear from the measurement method mentioned above, when calculating the true density D₀, the hollow portion is not regarded as a part of the hollow particle.

The void ratio (%) of the hollow particles is calculated by the following formula (III) from the apparent density D₁ and the true density D₀. Void ratio (%) = 100-(Apparent density D1/True density D0)×100

In the present disclosure, the lower limit of the volume average particle diameter of the hollow particles is preferably 1.0 um or more, more preferably 1.5 um or more, and still more preferably 2.0 um or more. On the other hand, the upper limit of the volume average particle diameter of the hollow particles is preferably 10.0 um or less, more preferably 8.0 um or less, and still more preferably 6.0 um or less. When the volume average particle diameter of the hollow particles is equal to or more than the lower limit value, the aggregability of the hollow particles decreases, and the hollow particles exert excellent dispersibility, accordingly. When the volume average particle diameter of the hollow particles is equal to or less than the upper limit value, shell thickness non-uniformity is suppressed, and a uniform shell is easily formed. In addition, the hollow particles are less likely to collapse, and they obtain high mechanical strength. When the volume average particle diameter is within the above range, since the particle diameter is sufficiently small, the hollow particles are preferably used as a substrate material such as an electronic circuit board, and they can be added to thin small substrates.

The shape of the hollow particles of the present disclosure is not particularly limited, as long as the hollow portion is formed in the interior. As the shape, examples include, but are not limited to, a spherical shape, an ellipsoidal shape and an irregular shape. Among them, a spherical shape is preferable in terms of ease of production, pressure resistance and so on.

The hollow particles of the present disclosure may have one or two or more hollow portions. From the viewpoint of maintaining good balance between the high void ratio and the mechanical strength and from the viewpoint of improving the dielectric property, the hollow particles preferably have only one hollow portion. In the hollow particles of the present disclosure, the percentage of the particles having only one or two hollow portions is preferably 90% by mass or more, and more preferably 95% by mass or more. Moreover, the percentage of the particles having only one hollow portion is preferably 90% by mass or more, and more preferably 95% by mass or more.

The shell of the hollow particles of the present disclosure and, when the hollow particles have two or more hollow portions, a partition separating the adjacent hollow portions from each other may be porous. From the viewpoint of improving the dielectric property, the shell and the partition are preferably solid.

The average circularity of the hollow particles of the present disclosure may be from 0.950 to 0.995.

An example of the image of the shape of the hollow particles of the present disclosure, is a bag made of a thin film and inflated with gas. A cross-section of the bag is like the hollow particle 10 shown in the diagram (5) of FIG. 1. In this example, one thin film is provided on the outside, and the interior is filled with gas.

The shape of the particles can be determined by SEM or TEM, for example.

The particle size distribution (volume average particle diameter (Dv)/number average particle diameter (Dn) of the hollow particles may be 1.1 or more and 2.5 or less, for example. When the particle size distribution is 2.5 or less, hollow particles such that performance slightly varies between the hollow particles, can be obtained. Also, when the particle size distribution is 2.5 or less, a product having uniform thickness can be produced in the case of producing, for example, a resin molded body containing the hollow particles of the present disclosure, in a sheet form.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

The hollow particles of the present disclosure are excellent in dielectric property, since the percentage of particles having a circularity is 0.85 or less is small. The particles having a circularity of 0.85 or less are typically cracked particles or deformed particles such as dented particles. In the present disclosure, such particles may be referred to as "irregular-shaped particles". Such irregular-shaped hollow particles have a low void ratio compared to spherical hollow particles; therefore, they are poor in dielectric property. Accordingly, the dielectric property of the hollow particles can be improved by decreasing the percentage of the irregular-shaped particles included in the hollow particles.

Also, compared to spherical hollow particles, the thermal decomposition initiation temperature of the irregular-shaped particles is low, since the weight of the irregular-shaped particles is quickly reduced by thermal decomposition, due to the small proportion of the hollow portion and the large proportion of the resin. Therefore, the heat resistance of the hollow particles can be improved by decreasing the percentage of the irregular-shaped particles included in the hollow particles.

The irregular-shaped particles have the following problem: compared to spherical particles, the irregular-shaped particles are poor in dispersibility since they are likely to aggregate when dispersed in the matrix resin. In addition, the irregular-shaped particles have the following problem: compared to spherical particles, the irregular-shaped particles are poor in pressure resistance since external pressure is likely to be locally applied thereto. When the irregular-shaped particles are dispersed in the matrix resin, aggregates are likely to be formed; external pressure is likely to be applied to the aggregates; and the pressure resistance further deteriorates accordingly. Therefore, the dispersibility and pressure resistance of the hollow particles can be improved by decreasing the percentage of the irregular-shaped particles included in the hollow particles.

The hollow particles of the present disclosure may contain, as impurities, small amounts of particles having a low circularity, such as cracked or deformed particles. In 100% by mass of the hollow particles of the present disclosure, the percentage of the particles having a circularity of 0.85 or less is preferably 10% by mass or less, more preferably 7% by mass or less, still more preferably 5% by mass or less, even more preferably 4% by mass or less, and particularly preferably 3% by mass or less.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles becomes more complex.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

In the present disclosure, the thermal decomposition initiation temperature of the hollow particles is preferably from 150°C to 400°C, more preferably 335°C or more, still more preferably 340°C or more, and even more preferably 345°C or more. The thermal decomposition initiation temperature of the hollow particles may be 370°C or less, or it may be 350°C or less. As the thermal decomposition initiation temperature increases, the heat resistance of the hollow particles gets better.

In the present disclosure, the thermal decomposition initiation temperature of the hollow particles can be measured as a 5% weight reduction temperature, using a TG-DTA device under an air atmosphere in the conditions of an air flow rate of 230 mL/min and a temperature increase rate of 10°C/min.

As the applications of the hollow particles of the present disclosure, examples include, but are not limited to, an additive used in the following, for example: members such as a low dielectric material, a heat insulation material, a sound insulation material and a light reflective material, which are used in various kinds of fields such as the automotive field, the electronics field, the electric field, the architecture field, the aviation field and the space field; food containers; footwears such as sports shoes and sandals; components of household appliances; components of bicycles; stationery supplies; tools; and filaments of 3D printers. Due to having excellent dielectric property, the hollow particles of the present disclosure are preferably used as an additive for achieving low transmission loss in the electronics or electric field. For example, the hollow particles of the present disclosure are preferably used as a material for electronic circuit boards. More specifically, by incorporating the hollow particles of the present disclosure in the insulation resin layer of an electronic circuit board, the transmission loss of the electronic circuit board can be reduced.

Also, the hollow particles of the present disclosure are preferably used as an additive used in materials for semiconductor devices. The materials are used, for example, for interlayer insulation materials, dry film resists, solder resists, bonding wires, magnet wires, semiconductor encapsulating materials, epoxy encapsulating materials, molded underfill materials, underfill materials, die bonding pastes, buffer coating materials, copper-clad laminates, flexible substrates, high frequency device modules, antenna modules and automotive radars. Of them, the hollow particles of the present disclosure are particularly preferably used as an additive used in materials for semiconductor devices, which are used for interlayer insulation materials, solder resists, magnet wires, epoxy encapsulating materials, underfill materials, buffer coating materials, copper-clad laminates, flexible substrates, high frequency device modules, antenna modules and automotive radars.

When the hollow particles of the present disclosure are added to the molded body, they exert excellent effects as a weight reducing material, a heat insulation material, an acoustic insulation material, a damping material and so on. Accordingly, the hollow particles of the present disclosure are suitable as an additive for molded bodies. For example, they can be used as an additive for resin molded bodies. Also, the hollow particles of the present disclosure can be contained as a filler in a reinforced fiber molded body formed by use of reinforced fibers and resin.

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Also, the hollow particles of the present disclosure are suitable as a rust retardant. Since the hollow particles of the present disclosure are also useful as an additive for decreasing electric conductivity, for example, a coating material containing the hollow particles of the present disclosure can be used as a rust-resistant coating material (such as a coating primer and a lubricating coating material) for increasing the anticorrosivity and rust resistance of steel and so on. A rust-resistant additive may be included in the hollow particles added to rust-resistant coating materials.

### 3. Resin composition

The resin composition of the present disclosure contains the hollow particles of the present disclosure and a matrix resin.

The resin composition of the present disclosure may be a liquid resin composition, or it may be a resin molded body. As the liquid resin composition, examples include, but are not limited to, a resin composition containing a liquid matrix resin before being subjected to a curing reaction, a resin composition obtained by dissolving or dispersing the components in the solvent, and a liquid resin composition liquefied by, since the matrix resin is a thermoplastic resin, melting the resin. As the resin molded body, examples include, but are not limited to, a molded body obtained by forming the above-described liquid resin composition into a molded body by a known method.

The matrix resin contained in the liquid resin composition of the present disclosure is not particularly limited. For example, the matrix resin may be a curable resin such as a thermosetting resin, a photocurable resin and a room temperature curable resin, or a thermoplastic resin.

The matrix resin contained in the resin composition of the present disclosure may be an unreacted monomer, a prepolymer, a macromonomer, a polymer, or a precursor of a cured resin such as polyamic acid. The matrix resin contained in the resin composition of the present disclosure may be a resin that functions as a binder when it is cured by, for example, heating, by light irradiation, or by use of a curing agent, a polymerization initiator, a catalyst or the like.

As the thermosetting resin, a known one may be used, and examples include, but are not limited to, phenol-based resin, melamine-based resin, urea-based resin, unsaturated polyester-based resin, epoxy-based resin, polyurethane-based resin, silicon-based resin, alkyd-based resin, thermosetting modified polyphenylene ether-based resin, thermosetting polyimide-based resin, benzoxazine-based resin, allyl-based resin, aniline-based resin, maleimide-based resin, bismaleimide triazine-based resin, liquid crystalline polyester-based resin, vinyl ester-based resin, unsaturated polyester-based resin, cyanate ester-based resin, polyetherimide resin, and uncured precursors thereof. These thermosetting resins may be used alone or in combination of two or more.

As the room temperature curable resin, examples include, but are not limited to, adhesives that are curable at room temperature by addition of a catalyst, such as an epoxy-based adhesive, silicone-based adhesive and an acrylic adhesive.

As the thermoplastic resin, examples include, but are not limited to, polyolefin-based resin, polyamide-based resin, polycarbonate-based resin, polyphenylene sulfide-based resin, polyether ether ketone-based resin, polystyrene-based resin, polyphenylene oxide-based resin, and liquid crystal polymers (LCP) .

These matrix resins may be used alone or in combination of two or more.

In the case of melt-kneading and molding the resin composition containing the hollow particles of the present disclosure and the thermoplastic resin, a known thermoplastic resin may be used as the thermoplastic resin, without any particular limitation. As the thermoplastic resin, examples include, but are not limited to, a polyolefin such as polypropylene and polyethylene, a polyamide such as PA6, PA66 and PA12, polyimide, polyamideimide, polyetherimide, polyetherketoneketone, polyvinyl chloride, polystyrene, poly(meth)acrylate, polycarbonate, polyvinylidene fluoride, acrylonitrile-butadiene-styrene copolymer (ABS), acrylonitrile-styrene copolymer (AS), polyphenylene ether, polyphenylene sulfide, polyester, polytetrafluoroethylene, and thermoplastic elastomer. These thermoplastic resins may be used alone or in combination of two or more.

In applications that require a decrease in permittivity or dielectric dissipation factor, preferably used as the matrix resin is an insulation resin such as epoxy-based resin, thermosetting modified polyphenylene ether-based resin, thermosetting polyimide-based resin, silicon-based resin, benzoxazine-based resin, melamine-based resin, urea-based resin, allyl-based resin, phenol-based resin, unsaturated polyester-based resin, polyurethane-based resin and aniline-based resin. Of them, preferred are epoxy-based resin, thermosetting polyimide-based resin, thermosetting modified polyphenylene ether-based resin, silicon-based resin, benzoxazine-based resin and melamine-based resin. These insulation resins may be used alone or in combination of two or more.

The content of the matrix resin in the total content (100% by mass) of the resin composition of the present disclosure, is not particularly limited, and it is preferably from 50% by mass to 95% by mass. When the content of the matrix resin is equal to or more than the lower limit value, the resin composition exhibits excellent moldability when molded into a resin molded body, and the molded body thus obtained has excellent mechanical properties. On the other hand, when the content of the matrix resin is equal to or less than the upper limit value, the hollow particles of the present disclosure can be sufficiently contained in the resin composition. Accordingly, effects such as the dielectric dissipation factor decreasing effect by the hollow particles of the present disclosure can be sufficiently exerted.

Depending on the type of the resin, the resin composition of the present disclosure may further contain an additive for developing a curing reaction, such as a curing agent, a curing catalyst and an initiator. As the curing agent, examples include, but are not limited to, an amine, an acid anhydride, an imidazole, a thiol, a phenol, a naphthol, a benzoxazine, a cyanate ester and a carbodiimide.

The content of the curing agent is not particularly limited. For example, it may be from 5 parts by mass to 120 parts by mass, with respect to 100 parts by mass of the matrix resin.

The content of the hollow particles of the present disclosure in the total solid content (100% by mass) of the resin composition of the present disclosure, is not particularly limited, and it is preferably from 5% by mass to 50% by mass. When the content of the hollow particles is equal to or more than the lower limit value, effects such as the dielectric dissipation factor decreasing effect by the hollow particles of the present disclosure, can be sufficiently exerted. On the other hand, when the content of the hollow particles is equal to or less than the upper limit value, the matrix resin can be sufficiently contained in the resin composition. Accordingly, the moldability and mechanical strength of the resin composition can be improved.

As needed, the resin composition of the present disclosure may further contain additives such as a compatibilizer, a UV absorber, a colorant, a thermal stabilizer, a filler and a flame retardant, a solvent and so on, to the extent that does not impair the effects of the present disclosure.

The resin composition of the present disclosure may further contain organic or inorganic fibers such as carbon fibers, glass fibers, aramid fibers and polyethylene fibers, when it is formed into the resin molded body.

For example, the resin composition of the present disclosure is obtained by mixing the hollow particles of the present disclosure, the matrix resin, and those which are added as needed, such as the additives and the solvent. When the matrix resin in the resin composition of the present disclosure is the thermoplastic resin, the thermoplastic resin may be melted and then mixed with the hollow particles of the present disclosure and the additives added as needed by melt-kneading.

The method for producing the resin molded body of the present disclosure is not particularly limited. For example, the liquid resin composition which is obtained by incorporating the hollow particles and so on to the liquid matrix resin before being subjected to a curing reaction, or the liquid resin composition obtained by dissolving or dispersing the components in the solvent, is applied on the support, and the applied liquid resin composition is dried and cured as needed, thereby obtaining the resin molded body.

As the material of the support, examples include, but are not limited to, a resin such as polyethylene terephthalate and polyethylene naphthalate, and a metal such as copper, aluminum, nickel, chromium, gold and silver. The surface of these supports may be coated with a release agent.

The liquid resin composition can be applied by a known method. As the method, examples include, but are not limited to, dip coating, roll coating, curtain coating, die coating, slit coating and gravure coating.

Also, the resin molded body can be obtained by impregnating the substrate with the liquid resin composition and drying and curing the liquid resin composition, as needed. As the substrate, examples include, but are not limited to, inorganic fibers such as carbon fibers, glass fibers, metal fibers and ceramic fibers, and organic synthetic fibers such as polyamide fibers, polyester-based fibers, polyolefin-based fibers and novoloid fibers. Of them, glass fibers (glass cloth) are preferred. The form of the substrate is not limited and may be a woven fabric, a non-woven fabric or the like.

When the liquid resin composition contains the solvent, the resin composition is preferably dried after the application or impregnation. The drying temperature is preferably a temperature at which the matrix resin is not cured, and it is generally 20°C or more and 200°C or less, and preferably 30°C or more and 150°C or less. The drying time is generally 30 seconds or more and 1 hour or less, and preferably 1 minute or more and 30 minutes or less.

The curing reaction of the resin composition is not particularly limited, and it is performed by a method based on the type of the matrix resin. When the resin composition contains the matrix resin which is curable by heating, the heating temperature for the curing reaction is not particularly limited, and it is appropriately adjusted depending on the type of the resin. The heating temperature is generally 30°C or more and 400°C or less, preferably 70°C or more and 300°C or less, and more preferably 100°C or more and 200°C or less. The curing time is 5 minutes or more and 5 hours or less, and preferably 30 minutes or more and 3 hours or less. The heating method is not particularly limited. For example, an electric oven may be used.

The liquid matrix resin before being subjected to a curing reaction and the matrix resin to be dissolved or dispersed in the solvent, may be a thermosetting or thermoplastic resin.

Also, the resin molded body of the present disclosure may be obtained by molding the liquid resin composition, which is obtained by melting the thermoplastic resin contained as the matrix resin, into a desired form by a known molding method such as extrusion molding, injection molding, press molding and compression molding. The temperature of the melt-kneading is not particularly limited, as long as it is a temperature at which the thermoplastic resin used can be melted. The melt-kneading can be carried out by a known method, and it is not particularly limited. For example, it can be carried out by use of a kneader such as a uniaxial or biaxial kneader.

The resin molded body of the present disclosure comprises the hollow particles of the present disclosure and a matrix resin.

The matrix resin contained in the resin molded body is a solidified product. The matrix resin as the solidified product is a resin solidified through or not through a chemical reaction, such as a resin cured by a curing reaction, a resin solidified by drying, and a resin solidified by cooling a thermoplastic resin. As needed, the molded body obtained by use of the above-described resin composition contains, as the matrix resin, a cured resin product cured by use of a curing agent, a polymerization initiator, a catalyst or the like. In this case, the matrix resin may contain a curing agent or the like. The molded body obtained by melt-kneading the hollow particles of the present disclosure and the thermoplastic resin and molding the resulting mixture, contains a solidified product as the matrix resin, which is the thermoplastic resin solidified by cooling.

The resin molded body of the present disclosure is excellent in dielectric property since it contains the hollow particles of the present disclosure.

The dielectric dissipation factor of the resin molded body of the present disclosure at a frequency of 10 GHz, is preferably 1.50×10⁻² or less, more preferably 1.00×10⁻² or less, still more preferably 9.50×10⁻³ or less, and even more preferably 9.00×10⁻³ or less. The lower limit is not particularly limited, and it may be 1.00×10⁻⁴ or more, for example.

The relative permittivity of the resin molded body of the present disclosure at a frequency of 10 GHz, is preferably 2.50 or less, more preferably 2.40 or less, and still more preferably 2.30 or less. The lower limit is not particularly limited, and it may be 1.00 or more, for example.

In the present disclosure, the relative permittivity and dielectric dissipation factor of the resin molded body are measured by use of a perturbation-type measuring device at a measurement frequency of 10 GHz.

The form of the resin molded body of the present disclosure is not particularly limited and may be any kind of moldable form. The resin molded body can be in any form such as a sheet form, a film form, a plate form, a tube form, and various kinds of other three-dimensional forms. When the resin molded body contains fibers, the fibers in the resin molded body may be in a non-woven fabric form. Also, when the resin molded body contain fibers, the resin molded body may be a molded body of a resin composition obtained by adding the hollow particles of the present disclosure to a fiber reinforced plastic containing the resin and fibers as described above.

As the applications of the resin composition and resin molded body of the present disclosure, examples include, but are not limited to, those in which the resin composition or the resin molded body can be used, among the above-mentioned applications of the hollow particles of the present disclosure.

### Examples

Hereinbelow, the present disclosure is described more specifically using examples and comparative examples. However, the present disclosure is not limited to these examples. Also, "part(s)" and "%" are on a mass basis unless otherwise specified.

### [Example 1]

### (1) Mixture liquid preparation step

First, the following materials were mixed to produce an oil phase.
Divinylbenzene: 37.5 parts
Ethylvinylbenzene: 1.6 parts
t-Butylperoxy diethylacetate (10-hour half-life temperature: 75°C): 0.89 parts
Hydrophobic solvent: Heptane (solubility in water at 20°C: 2.2 mg/L, boiling point: 98.4°C) 60.8 parts

Next, in a stirring tank, an aqueous solution in which 11.0 parts of sodium hydroxide (an alkali metal hydroxide) was dissolved in 55 parts of deionized water, was gradually added under stirring to an aqueous solution in which 15.7 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide: 8 parts). The dispersion was used as an aqueous phase.

The obtained aqueous phase and oil phase were mixed, thereby preparing a mixture liquid.

### (2) Suspension step

The mixture liquid obtained in the mixture liquid preparation step was suspended with an emulsifying disperser (product name: HOMOMIXER, manufactured by: PRIMIX Corporation) at a rotational frequency of 4,000 rpm for one minute, thereby preparing a suspension in which droplets of a monomer composition including the hydrophobic solvent were dispersed in water.

### (3) Polymerization step

In a nitrogen atmosphere, the temperature of the suspension obtained in the suspension step was increased to 80°C. The suspension was stirred for 24 hours under a temperature condition of 80°C, thereby performing a polymerization reaction. Accordingly, a precursor composition was obtained, which was a slurry solution in which precursor particles including the hydrophobic solvent were dispersed in water.

### (4) Washing step and solid-liquid separation step

The precursor composition obtained in the polymerization step was washed with dilute sulfuric acid (25°C, 10 minutes) to bring the pH of the composition to 5.5 or less. Next, water was separated therefrom by filtration. Then, 200 parts of deionized water was added to reslurry the resultant, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including the hydrophobic solvent.

### (5) Solvent removal step

The precursor particles obtained in the solid-liquid separation step were subjected to heating treatment for 12 hours with a vacuum dryer in a vacuum condition at 200°C, thereby removing the hydrophobic solvent from the particles. Accordingly, the hollow particles of Example 1 were obtained. From the scanning electron microscopy observation result and void ratio of the obtained hollow particles, the particles were confirmed to be spherical and to have a hollow portion.

### [Example 2]

The hollow particles of Example 2 were produced in the same manner as Example 1, except that in "(1) Mixture liquid preparation step", octane (solubility in water at 20°C: 0.7 mg/L, boiling point: 125.6°C) was used as the hydrophobic solvent in place of heptane, and in "(3) Polymerization step", the polymerization temperature was changed as shown in Table 1.

### [Example 3]

The hollow particles of Example 3 were produced in the same manner as Example 1, except the following: in "(1) Mixture liquid preparation step", t-butylperoxy pivalate (10-hour half-life temperature: 55°C) was used as the polymerization initiator in place of t-butylperoxy diethylacetate, and the magnesium chloride and sodium hydroxide amounts used for the preparation of the aqueous phase were changed as shown in Table 1; moreover, in "(3) Polymerization step", the polymerization temperature was changed as shown in Table 1.

### [Example 4]

The hollow particles of Example 4 were produced in the same manner as Example 1, except that in "(1) Mixture liquid preparation step", the amount of the added divinylbenzene was changed to 24.6 parts; the amount of the added ethylvinylbenzene was changed to 14.5 parts; and the magnesium chloride and sodium hydroxide amounts used for the preparation of the aqueous phase were changed as shown in Table 1.

### [Example 5]

The hollow particles of Example 5 were produced in the same manner as Example 1, except that in "(1) Mixture liquid preparation step", the amount of the added divinylbenzene was changed to 35.6 parts; the amount of the added ethylvinylbenzene was changed to 1.5 parts; 2.0 parts of ethylene glycol dimethacrylate was added to the oil phase; and the magnesium chloride and sodium hydroxide amounts used for the preparation of the aqueous phase were changed as shown in Table 1.

### [Example 6]

The hollow particles of Example 6 were produced in the same manner as Example 1, except that in "(1) Mixture liquid preparation step", the amount of the added divinylbenzene was changed to 22.3 parts; the amount of the added ethylvinylbenzene was changed to 15.6 parts; and the magnesium chloride and sodium hydroxide amounts used for the preparation of the aqueous phase were changed as shown in Table 1.

### [Example 7]

The hollow particles of Example 7 were produced in the same manner as Example 1, except that in "(1) Mixture liquid preparation step", the amount of the added divinylbenzene was changed to 31.6 parts; the amount of the added ethylvinylbenzene was changed to 1.3 parts; 0.75 parts of t-butylperoxy diethylacetate and 1.07 parts of t-butylperoxy pivalate were used as the polymerization initiator; the heptane amount was changed to 67.1 parts; and the magnesium chloride and sodium hydroxide amounts used for the preparation of the aqueous phase were changed as shown in Table 1.

### [Example 8]

The hollow particles of Example 8 were produced in the same manner as Example 1, except the following: in "(1) Mixture liquid preparation step", the magnesium chloride and sodium hydroxide amounts used for the preparation of the aqueous phase were changed as shown in Table 1; in "(3) Polymerization step", the polymerization temperature was changed as shown in Table 1; and in "(4) Washing step and solid-liquid separation step", a nonionic surfactant was added during the reslurrying to loosen particle aggregation, and the number of the water washing treatments was increased.

### [Comparative Example 1]

The hollow particles of Comparative Example 1 were produced in the same manner as Example 1, except that the mixture liquid preparation step ("(1) Mixture liquid preparation step") was changed as follows, and in "(3) Polymerization step", the polymerization temperature was changed as shown in Table 2.

The mixture liquid preparation step of Comparative Example 1 was carried out as follows.

First, the following materials were mixed to produce an oil phase.
Ethylene glycol dimethacrylate: 31.85 parts
Trimethylolpropane triacrylate: 13.65 parts
2,2'-azobis(2,4-dimethylvaleronitrile) (10-hour half-life temperature: 51°C): 1.04 parts
Hydrophobic solvent: Cyclohexane 54.5 parts

Next, in a stirring tank, an aqueous solution in which 16.5 parts of sodium hydroxide (an alkali metal hydroxide) was dissolved in 55 parts of deionized water, was gradually added under stirring to an aqueous solution in which 23.5 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide: 12 parts). The dispersion was used as an aqueous phase.

The obtained aqueous phase and oil phase were mixed, thereby preparing a mixture liquid.

### [Comparative Example 2]

First, the following materials were mixed to produce an oil phase.
Styrene (St): 12.5 parts
Divinylbenzene: 16.2 parts
Ethylvinylbenzene: 3.8 parts
HS CRYSTA 4100 (product name, side-chain crystalline polyolefin manufactured by Hokoku Corporation): 3.3 parts
BLEMMER (registered trademark) 50 PEP-300 (product name, polyethylene glycol-propylene glycol monomethacrylate manufactured by NOF Corporation): 3.3 parts
PEROYL L (product name, polymerization initiator manufactured by NOF Corporation): 1.07 parts
Hydrophobic solvent: Heptane 26.04 parts

Next, an aqueous phase was produced by mixing 370 parts of deionized water and 0.18 parts of RAPISOL A-80 (surfactant manufactured by NOF Corporation).

The oil phase was added to the aqueous phase, and a suspension was prepared by use of an ultrasonic homogenizer. The suspension thus obtained was heated at 70°C for 4 hours for polymerization, thereby obtaining a slurry. The obtained slurry was heated at 100°C for 24 hours, thereby producing the hollow particles of Comparative Example 2.

### [Comparative Example 3]

First, the following materials were mixed to produce an oil phase.
Divinylbenzene: 48.0 parts
Ethylvinylbenzene: 2.0 parts
Benzoyl peroxide (10-hour half-life temperature: 74°C): 1.0 part
Hydrophobic solvent: Hexadecane 50.0 parts

Next, in a stirring tank, an aqueous solution in which 10 parts of polyvinyl alcohol (PVA) was dissolved in 3000 parts of deionized water, was prepared. The aqueous solution was used as an aqueous phase.

The obtained aqueous phase and oil phase were mixed, thereby preparing a mixture liquid.

The obtained mixture liquid was suspended by the same method as the suspension step of Example 1, thereby preparing a suspension in which droplets of a monomer composition including the hydrophobic solvent were dispersed in water.

In a nitrogen atmosphere, the temperature of the obtained suspension was increased to 70°C. The suspension was stirred for 24 hours under a temperature condition of 70°C, thereby performing a polymerization reaction. Accordingly, a slurry was obtained, in which precursor particles including the hydrophobic solvent were dispersed in water.

Next, the obtained slurry was filtered through a filter paper to isolate the precursor particles including the hydrophobic solvent. In the conditions of a temperature of about 70°C and a pressure of about 100000 Pa (under the atmospheric pressure), the precursor particles were dried for the removal of the hydrophobic solvent from the particles, thereby producing the hollow particles of Comparative Example 3.

### [Evaluation]

The hollow particles obtained in the examples and the comparative examples were measured and evaluated as follows. The results are shown in Tables 1 and 2.

### 1. Density and void ratio of the hollow particles

### 1-1. Measurement of the apparent density of the hollow particles

First, approximately 30 cm³ of the hollow particles were introduced into a measuring flask with a volume of 100 cm³, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density D₁ (g/cm³) of the hollow particles was calculated by the following formula (I). Apparent density D1 = [Mass of the hollow particles]/(100-[Mass of the isopropanol]/[Specific gravity of the isopropanol at the measuring temperature])

### 1-2. Measurement of the true density of the hollow particles

The hollow particles were pulverized in advance; approximately 10 g of the pulverized hollow particles were introduced into a measuring flask with a volume of 100 cm³; and the mass of the introduced pulverized particles was precisely weighed.

Then, similarly to the measurement of the apparent density mentioned above, isopropanol was added to the measuring flask; the mass of the isopropanol was precisely weighed; and the true density D₀ (g/cm³) of the hollow particles was calculated by the following formula (II). True density D0 = [Mass of the pulverized hollow particles]/(100-[Mass of the isopropanol]/[Specific gravity of the isopropanol at the measuring temperature])

### 1-3. Calculation of void ratio

The void ratio of the hollow particles was calculated by the following formula (III) from the apparent density D₁ and the true density D₀. Void ratio (%) = 100-(Apparent density D1/True density D0)×100

### 2. Measurement of volume average particle diameter (Dv) and number average particle diameter (Dn), and calculation of particle size distribution (Dv/Dn)

The volume average particle diameter (Dv) and number average particle diameter (Dn) of the hollow particles were measured with a particle size distribution measuring device (product name: MULTISIZER 4e, manufactured by: Beckman Coulter, Inc.), and the particle size distribution (Dv/Dn) was calculated. The measurement condition is as follows.
Aperture diameter: 50 um
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by: Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

### 3. Measurement of residual double bond ratio

For the polymerizable monomer before being subjected to a polymerization reaction, which was used for the production of the hollow particles, and for the polymer contained in the hollow particles, their infrared absorption spectra expressed in absorbance were measured by use of ATR-IR (product name: SPECTRUM ONE, manufactured by: PERKIN ELMER Inc.) The measurement of the polymerizable monomer before being subjected to a polymerization reaction was carried out as follows: 0.1 g of a measurement sample composed of a polymerizable monomer of the same type and in the same amount as the polymerizable monomer used for the production of the hollow particles, was placed on the top of a cell, and the measurement sample was brought into contact with a crystal for the measurement. The measurement of the polymer contained in the hollow particles was carried out as follows: 0.1 g of the hollow particles were placed on the top of a cell, and the hollow particles were brought into contact with a crystal by fastening a compression bearing from the top, thereby measuring the polymer.

From the thus-obtained infrared absorption spectra, the residual double bond ratio was calculated by the above-mentioned method. For example, in Example 5, the residual double bond ratio was calculated as follows.

In Example 5, 35.6 parts of divinylbenzene, 1.5 parts of ethylvinylbenzene, and 2.0 parts of ethylene glycol dimethacrylate were used as the polymerizable monomer. Since the content was the largest, the divinylbenzene (91% by mass) was selected as the reference monomer. As the structure that does not increase or decrease before and after a polymerization reaction, the C-H bond of the benzene ring contained in the divinylbenzene was selected.

For the infrared absorption spectrum of the polymerizable monomer before being subjected to a polymerization reaction and for the infrared absorption spectrum of the polymer, the peak derived from the C-H bond of the benzene ring contained in the divinylbenzene, was specified as the reference peak. Since the peak derived from the C-H bond of the benzene ring contained in the divinylbenzene and the peak derived from the C-H bond of the benzene ring contained in the ethylvinylbenzene appear at the same position, the value obtained by dividing the peak intensity of the reference peak by the total content rate (0.95) of the divinylbenzene and the ethylvinylbenzene, was defined as the reference peak intensity. The reference peak intensity obtained from the infrared absorption spectrum of the polymerizable monomer before being subjected to a polymerization reaction was 0.167. The reference peak intensity obtained from the infrared absorption spectrum of the polymer was 0.0760.

Next, from each infrared absorption spectrum, the peak intensity of the peak derived from the polymerizable unsaturated double bond (C=C) derived from the divinylbenzene, the ethylvinylbenzene and the ethylene glycol dimethacrylate, was measured. The peak intensity of the peak derived from the polymerizable unsaturated double bond (C=C), which was obtained from the infrared absorption spectrum of the polymerizable monomer before being subjected to a polymerization reaction, was 0.0724. The peak intensity of the peak derived from the polymerizable unsaturated double bond (C=C), which was obtained from the infrared absorption spectrum of the polymer, was 0.00438.

Accordingly, the ratio (M₁/M₀) of the peak intensity (M₁) of the peak derived from the polymerizable unsaturated double bond (C=C) to the reference peak intensity (M₀), all of which were obtained from the infrared absorption spectrum of the polymerizable monomer before being subjected to a polymerization reaction, was 0.0724/0.167. As a result of calculation, the ratio (M₁/M₀) was 0.434. The ratio of (P₁/P₀) of the peak intensity (P₁) of the peak derived from the polymerizable unsaturated double bond (C=C) to the reference peak intensity (P₀), all of which were obtained from the infrared absorption spectrum of the polymer, was 0.00438/0.0760. As a result of calculation, the ratio (P₁/P₀) was 0.0576.

Then, the peak intensity ratio (M₁/M₀) obtained from the infrared absorption spectrum of the polymerizable monomer and the peak intensity ratio (P₁/P₀) obtained from the infrared absorption spectrum of the polymer were applied to the formula (A). The residual double bond ratio was calculated by the following calculation formula: (0.0576/0.434)×100. As a result, the residual double bond ratio was 13.3%.

### 4. Measurement of metal content

Wet digestion of the weighed hollow particles (10 g) was carried out by use of a microwave (MULTIWAVE 3000 manufactured by PerkinElmer Inc.) ICP optical emission spectroscopy of the thus-obtained degradation product was carried out by use of an ICP optical emission spectrometer (OPTIMA 2100 DV manufactured by PerkinElmer Inc.) to measure the total mass of the metal. The metal species was specified by elemental analysis by X-ray fluorescence spectrometry (XRF). The ratio of the total mass of the metal in the degradation product with respect to the mass of the hollow particles, was calculated and regarded as the content of the metal in the hollow particles.

### 5. Measurement of the relative permittivity (Dk) and dielectric dissipation factor (Df) of the hollow particles

Using a perturbation-type measuring device (manufactured by: AET Inc., model: ADMS01Nc), the relative permittivity and dielectric dissipation factor of the hollow particles were measured at a frequency of 10 GHz and at room temperature (25°C) .

### 6. Heat resistance

First, about 3 mg of the hollow particles were put in a sample pan. Using a TG-DTA device (product name: THERMO PLUS EVO 2, manufactured by: Rigaku Corporation), the 5% weight reduction temperature (Td5) of the hollow particles was obtained by measurement under an air atmosphere at a temperature increase rate of 10°C/min and an air flow rate of 230 mL. As the Td5 becomes higher, the heat resistance of the hollow particles becomes more excellent.

### (Heat resistance evaluation criteria)

A: Td5 was 345°C or more.
B: Td5 was 340°C or more and less than 345°C.
C: Td5 was 335°C or more and less than 340°C.
D: Td5 was less than 335°C.

### 7. Measurement of the relative permittivity (Dk) and dielectric dissipation factor (Df) of polyimide film containing the hollow particles

### 7-1. Production of polyimide film containing the hollow particles

First, 50 g of a polyamic acid solution (product name: U-VARNISH-A, manufactured by: UBE Industries, Ltd.) was measured in a cup, and 2.5 g of the hollow particles were added thereto. The mixture thus-obtained was uniformly dispersed in a planetary centrifugal mixer (product name: MAZERUSTAR, manufactured by: Kurabo Industries Ltd.), thereby obtaining a resin composition. Next, an aluminum foil was attached on a glass plate. On the attached aluminum foil, the obtained resin composition was applied by use of bar coater No. 75 to form a coating film. Under a nitrogen atmosphere, the coating film was heated at 120°C for 30 minutes, 150°C for 10 minutes, 200°C for 10 minutes, and then 250°C for 30 minutes to polyimidize the polyamic acid, thereby curing the coating film. Accordingly, a polyimide film containing the hollow particles was formed on the aluminum foil. The thus-obtained laminate of the film and the aluminum foil was immersed overnight in a 1 N hydrochloric acid aqueous solution to remove the aluminum foil, thereby obtaining the film only. The obtained film was washed with deionized water and dried, thereby obtaining the polyimide film containing the hollow particles.

### 7-2. Measurement of the relative permittivity (Dk) and dielectric dissipation factor (Df) of the film

A measurement sample was obtained by cutting the polyimide film containing the hollow particles into a size of 3 mm (width) and 80 mm (length). Using the perturbation-type measuring device (manufactured by: AET Inc., model: ADMS01Nc), the relative permittivity and dielectric dissipation factor of the polyimide film containing the hollow particles were measured at a frequency of 10 GHz and at room temperature (25°C).

As Reference Example 1, the relative permittivity and dielectric dissipation factor of a polyimide film not containing hollow particles were measured in the same manner as above.

### [Table 1]

**Table 1**

| | | Example 1 | Example 2 | Example 3 | Example 4 |
|---|---|---|---|---|---|
| Polymerizable monomer | Divinylbenzene | 37.5 | 37.5 | 37.5 | 24.6 |
| | Ethvlvinvlbenzene | 1.6 | 1.6 | 1.6 | 14.5 |
| | EGDMA | | | | |
| | Hydrocarbon monomer (%) | 100 | 100 | 100 | 100 |
| | Crosslinkable monomer (%) | 96 | 96 | 96 | 63 |
| | Crosslinkable hydrocarbon monomer (%) | 96 | 96 | 96 | 63 |
| Hydrophobic solvent | Heptane | 60.8 | | 60.8 | 60.8 |
| | Octane | | 60.8 | | |
| Polymerization initiator | t-Butylperoxy pivalate | | | 0.89 | |
| | t-Butylperoxy diethylacetate | 0.89 | 0.89 | | 0.89 |
| | 10-Hour half-time temperature (°C) | 75 | 75 | 55 | 75 |
| Dispersion stabilizer | Mg(OH)₂ | 8 | 8 | 10 | 10 |
| | MgCl₂ | 15.7 | 15.7 | 19.6 | 19.6 |
| | NaOH | 11.0 | 11.0 | 13.7 | 13.7 |
| Deionized water | | 280 | 280 | 280 | 280 |
| Polymerization conditions | Polymerization temperature (°C) | 80 | 90 | 65 | 80 |
| | Polymerization time (h) | 24 | 24 | 24 | 24 |
| Properties of hollow particles | Dv (µm) | 4.1 | 4.4 | 3.1 | 3.4 |
| | Dv/Dn | 1.4 | 1.3 | 1.4 | 1.3 |
| | Void ratio (%) | 70 | 69 | 69 | 68 |
| | Residual double bond ratio (%) | 12.8 | 14.3 | 24.5 | 12.1 |
| | Metal content (ppm) | 25 | 26 | 41 | 42 |
| | Relative permittivity (10 GHz) | 1.36 | 1.37 | 1.37 | 1.37 |
| | Dielectric dissipation factor (10 GHz) | 2.41E-03 | 2.35E-03 | 2.32E-03 | 2.27E-03 |
| | Heat resistance | B | B | B | A |
| Properties of Polyimide film | Relative permittivity (10 GHz) | 2.23 | 2.24 | 2.25 | 2.23 |
| | Dielectric dissipation factor (10 GHz) | 8.76E-03 | 8.70E-03 | 8.91E-03 | 8.84E-03 |

**Table 1-continued**

| | | Example 5 | Example 6 | Example 7 | Example 8 |
|---|---|---|---|---|---|
| Polymerizable monomer | Divinylbenzene | 35.6 | 22.3 | 31.6 | 37.5 |
| | Ethvlvinvlbenzene | 1.5 | 15.6 | 1.3 | 1.6 |
| | EGDMA | 2.0 | | | |
| | Hydrocarbon monomer (%) | 95 | 100 | 100 | 100 |
| | Crosslinkable monomer (%) | 96 | 59 | 96 | 96 |
| | Crosslinkable hydrocarbon monomer (%) | 91 | 59 | 96 | 96 |
| Hydrophobic solvent | Heptane | 60.8 | 60.8 | 67.1 | 60.8 |
| | Octane | | | | |
| Polymerization initiator | t-Butylperoxy pivalate | | | 1.07 | |
| | t-Butylperoxy diethylacetate | 0.89 | 0.89 | 0.75 | 0.89 |
| | 10-Hour half-time temperature (°C) | 75 | 75 | 75 | 75 |
| Dispersion stabilizer | Mg(OH)₂ | 10 | 10 | 10 | 10 |
| | MgCl₂ | 19.6 | 19.6 | 19.6 | 19.6 |
| | NaOH | 13.7 | 13.7 | 13.7 | 13.7 |
| Deionized water | | 280 | 280 | 280 | 280 |
| Polymerization conditions | Polymerization temperature (°C) | 80 | 80 | 80 | 90 |
| | Polymerization time (h) | 24 | 24 | 24 | 24 |
| Properties of hollow particles | Dv (µm) | 3.8 | 3.5 | 3.3 | 3.2 |
| | Dv/Dn | 1.4 | 1.4 | 1.4 | 1.4 |
| | Void ratio (%) | 69 | 68 | 75 | 70 |
| | Residual double bond ratio (%) | 13.3 | 11.9 | 11.1 | 16.1 |
| | Metal content (ppm) | 41 | 43 | 39 | 23 |
| | Relative permittivity (10 GHz) | 1.38 | 1.37 | 1.31 | 1.37 |
| | Dielectric dissipation factor (10 GHz) | 2.97E-03 | 2.57E-03 | 2.34E-03 | 5.98E-04 |
| | Heat resistance | C | B | B | A |
| Properties of Polyimide film | Relative permittivity (10 GHz) | 2.24 | 2.23 | 2.23 | 2.25 |
| | Dielectric dissipation factor (10 GHz) | 9.65E-03 | 9.13E-03 | 8.70E-03 | 8.68E-03 |

### [Table 2]

**Table 2**

| | | Comparative Example 1 | Comparative Example 2 | Comparative Example 3 | Reference Example 1 |
|---|---|---|---|---|---|
| Polymerizable monomer | Divinylbenzene | | 16.2 | 48.0 | |
| | Ethylvinylbenzene | | 3.8 | 2.0 | |
| | EGDMA | 31.85 | | | |
| | TMPT | 13.65 | | | |
| | St | | 12.5 | | |
| | 50PEP-300 | | 3.3 | | |
| Hydrophobic solvent | Cyclohexane | 54.5 | | | |
| | Heptane | | 26.04 | | |
| | Hexadecane | | | 50.0 | |
| Additive | HS4100 | | 3.3 | | |
| Polymerization initiator | 2,2'-Azobis(2,4-dimethylvaleronitrile) | 1.04 | | | |
| | Benzoyl peroxide | | | 1.0 | |
| | PEROYL L | | 1.07 | | |
| | 10-Hour half-time temperature (°C) | 51 | 62 | 74 | |
| Dispersion stabilizer | Mg(OH)₂ | 12 | | | |
| | MgCl₂ | 23.5 | | | |
| | NaOH | 16.5 | | | |
| | PVA | | | 10 | |
| | A-80 | | 0.18 | | |
| Deionized water | | 280 | 370 | 3000 | |
| Polymerization conditions | Polymerization temperature (°C) | 65 | 70 | 70 | |
| | Polymerization time (h) | 24 | 4 | 24 | |
| Properties of hollow particles | Dv (µm) | 2.6 | 0.4 | 10.0 | |
| | Dv/Dn | 1.2 | 1.5 | 1.3 | |
| | Void ratio (%) | 64 | 36 | 60 | |
| | Residual double bond ratio (%) | 14.7 | 25.1 | 36.1 | |
| | Metal content (ppm) | 57 | - | - | |
| | Relative permittivity (10 GHz) | 1.45 | 1.80 | 1.52 | |
| | Dielectric dissipation factor (10 GHz) | 1.13E-02 | 9.10E-03 | 2.50E-02 | |
| | Heat resistance | D | D | C | |
| Properties of Polyimide film | Relative permittivity (10 GHz) | 2.26 | 2.67 | 2.55 | 3.14 |
| | Dielectric dissipation factor (10 GHz) | 1.43E-02 | 1.39E-02 | 1.80E-02 | 1.76E-02 |

Tables 1 and 2 show the amount (parts by mass) of the added materials and the measurement or evaluation results.

In Tables 1 and 2, for simplification, the dielectric dissipation factor values are expressed by using the exponent notation defined in JIS X 0210. For example, the term "2.41×10⁻³" is expressed as "2.41E-03".

The meaning of the abbreviations shown in Tables 1 and 2 are as follows.
EGDMA: Ethylene glycol dimethacrylate
TMPT: Trimethylolpropane triacrylate
St: Styrene
50 PEP-300: Polyethylene glycol-propylene glycol monomethacrylate (product name: BLEMMER (registered trademark) 50 PEP-300, manufactured by NOF Corporation)
HS4100: Side-chain crystalline polyolefin (product name: HS CRYSTA 4100, manufactured by: Hokoku Corporation)
PVA: Polyvinyl alcohol
A-80: Anionic surfactant, sulfosuccinic acid diester salt (product name: RAPISOL A-80, manufactured by: NOF Corporation)

### [Consideration]

The hollow particles obtained in Comparative Example 1 were particles formed by use of the acrylic monomer. They were poor in dielectric property and less effective in decreasing the permittivity and dielectric dissipation factor of the polyimide film. In the hollow particles obtained in Comparative Example 1, the dielectric property of the particles as a whole was also poor. The reason was considered as follows: due to the absence of the hydrocarbon monomer units in the polymer in the shell, the dielectric property of the shell was poor.

Comparative Example 2 corresponded to Example 1 in Patent Document 1. The obtained hollow particles were poor in dielectric property and less effective in decreasing the permittivity and dielectric dissipation factor of the polyimide film. In the hollow particles obtained in Comparative Example 2, the dielectric property of the particles as a whole was poor. The reasons were considered as follows: the dielectric property of the shell was poor since the amount of the hydrocarbon monomer units contained in the polymer in the shell was small; moreover, the small void ratio deteriorated the dielectric property.

In the hollow particles obtained in Comparative Example 3, the residual double bond ratio of the polymer contained in the shell was high, and the hollow particles were poor in dielectric property and less effective in decreasing the permittivity and dielectric dissipation factor of the polyimide film. Also in the hollow particles obtained in Comparative Example 3, the content of the surfactant (PVA) present on the surface of the particles was 3000 ppm. The hollow particles obtained in Comparative Example 3 were presumed as follows: the dielectric property of the shell was poor since the residual double bond ratio of the polymer contained in the shell was high; moreover, the dielectric property of the hollow particles was deteriorated since the PVA, which was used in the production process, remained on the surface of the particles. The high residual double bond ratio of the hollow particles obtained in Comparative Example 3 was presumed to be because of the low polymerization temperature.

The hollow particles obtained in Examples 1 to 8 were spherical hollow particles comprising a hollow portion, wherein the void ratio of the hollow particles was 50% or more; wherein, as the resin, the shell contained a polymer which contained 91% by mass or more of hydrocarbon monomer units and 50% by mass or more of crosslinkable monomer units; wherein the residual double bond ratio of the polymer was 30.0% or less; and wherein the dielectric dissipation factor of the hollow particles at a frequency of 10 GHz was 3.00×10⁻³ or less and low. Accordingly, they were hollow particles excellent in dielectric property.

The excellent dielectric property of the hollow particles obtained in Examples 1 to 8 even at a frequency of 10 GHz, was presumed to be because of the following factors: the polymer forming the skeleton of the shell contained a large amount of hydrocarbon; moreover, due to the low residual double bond ratio of the polymer, the molecular mobility of the shell was low, and the void ratio was sufficiently high. In the hollow particles obtained in Examples 1 to 8, it was thought that the following also contributed to the improvement of the dielectric property: the amount of the residual decomposition product of the polymerization initiator was small; no surfactant was present on the surface of the particles; and the metal content was small. Since the hollow particles obtained in Examples 1 to 8 were particles obtained without the use of a surfactant, no surfactant was detected on the surface of the particles. Also, the hollow particles obtained in Examples 1 to 8 were effective in decreasing the permittivity and dielectric dissipation factor of the polyimide film.

The dielectric property of the hollow particles obtained in Examples 1 to 4 was better than the hollow particles obtained in Examples 5 and 6. The reason was presumed as follows: the content of the components other than the polymer in the shell was very small since, in the polymer forming the skeleton of the shell, the content of the hydrocarbon monomer units was particularly large, and the amounts of impurities contained in the raw materials were small.

The reason for the particularly excellent dielectric property of the hollow particles obtained in Example 7 was presumed to be because of the high void ratio.

The reason for the low dielectric dissipation factor of the hollow particles obtained in Example 8 was presumed as follows: an increase in the dielectric dissipation factor due to moisture absorption by impurities, was suppressed since larger amounts of impurities were removed in the washing step.

As a result of examination of 1000 to 3000 particles that were randomly selected from the hollow particles obtained in each of Examples 1 to 8, in all of Examples 1 to 8, the percentage of particles having a circularity of 0.85 or less was 7% by mass or less, and the percentage of particles having only one or two hollow portions was 95% by mass or more.

### Reference Signs List

1. Aqueous medium
2. Low polarity material
4a. Hydrophobic solvent
4b. Material not containing hydrophobic solvent
6. Shell
7. Hollow portion
8. Droplet
9. Precursor particle
10. Hollow particle having a gas-filled hollow portion

## Claims

1. Hollow particles which comprise a shell containing a resin and a hollow portion surrounded by the shell,
wherein a void ratio of the hollow particles is 50% or more;
wherein, as the resin, the shell contains a polymer which contains 91% by mass or more of hydrocarbon monomer units and 50% by mass or more of crosslinkable monomer units; wherein at least a part of the hydrocarbon monomer units are crosslinkable hydrocarbon monomer units; wherein a residual double bond ratio of the polymer is 30.0% or less; and
wherein a dielectric dissipation factor of the hollow particles at a frequency of 10 GHz is 3.00×10⁻³ or less.

2. The hollow particles according to Claim 1, wherein a relative permittivity of the hollow particles at a frequency of 10 GHz is 1.00 or more and 1.40 or less.

3. The hollow particles according to Claim 1 or 2, wherein the void ratio is 65% or more.

4. The hollow particles according to any one of Claims 1 to 3, wherein a volume average particle diameter of the hollow particles is 1.0 um or more and 10.0 um or less.

5. A resin composition comprising the hollow particles defined by any one of Claims 1 to 4 and a matrix resin.

6. A resin molded body comprising the hollow particles defined by any one of Claims 1 to 4 and a matrix resin.
